# EUROPEAN PATENT APPLICATION

(11) **EP 2 941 032 A1**
(43) Date of publication of application: **04.11.2015**
(21) Application number: 13872777.1
(22) Date of filing: 22.01.2013
(51) Int. Cl.: H04W 12/06

(54) **METHOD AND NETWORK DEVICE FOR SECURITY AUTHENTICATION OF MOBILE COMMUNICATION SYSTEM**

(71) Applicant: Huawei Technologies Co., Ltd., Longgang District Shenzhen, Guangdong 518129 (CN)
(72) Inventor: CHEN, Jing, Shenzhen Guangdong 518129 (CN); JIN, Weisheng, Shenzhen Guangdong 518129 (CN)
(74) Representative: Pfenning, Meinig & Partner GbR
(86) International application number: PCT/CN2013/070844
(87) International publication number: WO 2014/113922

(57) **Abstract**

Embodiments of the present invention disclose a method for security authentication of a mobile communications system, and a network device. The method for security authentication of a mobile communications system includes: receiving, by an HSS, a request for a special authentication vector and is sent by a proxy server, where the request for a special authentication vector is sent by the proxy server after the proxy server receives a request for an authentication vector and is sent by an SGSN; generating, by the HSS, a special authentication vector according to the request for a special authentication vector; and sending, by the HSS, the special authentication vector to the proxy server, so that the proxy server, an access network element, the SGSN, and an LTE UE complete security authentication. By using the method for security authentication of a mobile communications system, and the network device that are disclosed in the embodiments of the present invention enable an LTE UE can use a 2G/3G network.

## Description

### TECHNICAL FIELD

Embodiments of the present invention relate to the communications field, and in particular, to a method for security authentication of a mobile communications system, and a network device.

### BACKGROUND

A Long Term Evolution (Long Term Evolution, "LTE" for short)/a System Architecture Evolution (System Architecture Evolution, "SAE" for short) network is a new mobile communications system formulated by the 3rd Generation Partnership Project (3rd Generation Partnership Project, "3GPP" for short), a standardization organization. This network is a next evolution direction of existing 3G networks that include a Wideband Code Division Multiple Access (Wideband Code Division Multiple Access, "WCDMA" for short) network, a Time Division-Synchronous Code Division Multiple Access (Time Division-Synchronous Code Division Multiple Access, "TD-SCDMA" for short) network, and a Code Division Multiple Access 2000 (Code Division Multiple Access 2000, "CDMA2000" for short) network. Currently, commercially deployed LTE/SAE networks have been operating in some countries. Security is an indispensable feature in commercial operation of a mobile communications system, and authentication is one important feature of security features. An authentication and key agreement (Authentication and Key Agreement, "AKA" for short) mechanism has been formulated for a Universal Mobile Telecommunications System (Universal Mobile Telecommunication System, "UMTS" for short) network and an LTE/SAE network to execute two-way authentication between a UE and a network. A two-way authentication mechanism of the UMTS network is referred to as a UMTS AKA, and a two-way authentication mechanism of the LTE/SAE network is referred to as an evolved packet system (Evolved Packet System, "EPS" for short) AKA. In some special scenarios, a case in which an LTE user equipment (User Equipment, "UE" for short) accesses a 2G/3G core network through an LTE access network exists. The 2G/3G core network can obtain a UMTS AV only from an HSS, but when accessing the 2G/3G core network through the LTE network, the LTE UE refuses to use the UMTS AV for authentication. Therefore, the LTE UE cannot access the 2G/3G core network through the LTE access network.

### SUMMARY

In view of this, embodiments of the present invention provide a method for security authentication of a mobile communications system, and a network device, which enable an LTE UE to complete security authentication and access a 2G/3G network.

According to a first aspect, a method for security authentication of a mobile communications system is provided and includes:
receiving, by an HSS, a request for a special authentication vector and is sent by a proxy server, where the request for a special authentication vector is sent by the proxy server after the proxy server receives a request for an authentication vector and is sent by an SGSN;
generating, by the HSS, a special authentication vector according to the request for a special authentication vector; and
sending, by the HSS, the special authentication vector to the proxy server, so that the proxy server, an access network element, the SGSN, and an LTE UE complete security authentication.

In a first possible implementation manner, the request for an authentication vector is sent by the SGSN to the proxy server after the SGSN receives a UMTS attach request message sent by the access network element, the UMTS attach request message is obtained by the access network element by converting an attach request message, and the attach request message is sent by the LTE UE.

In a second possible implementation manner, with reference to the first aspect or the first possible implementation manner of the first aspect, that the proxy server, an access network element, the SGSN, and an LTE UE complete security authentication includes:
sending, by the proxy server, the special authentication vector to the SGSN; sending, by the SGSN, a UMTS AKA authentication challenge to the access network element; converting, by the access network element, the UMTS AKA authentication challenge into an LTE AKA authentication challenge, and then sending the LTE AKA authentication challenge to the LTE UE, and performing, by the LTE UE, verification according to the LTE AKA authentication challenge and generating a RES and a key K_{ASME}, and then sending an LTE AKA authentication response that includes the RES to the access network element, so that the access network element, the SGSN, and the LTE UE further complete security authentication.

In a third possible implementation manner, with reference to the first aspect or the first to the second possible implementation manners of the first aspect, the special authentication vector includes an XRES, a CK, and an IK; and
that the access network element, the SGSN, and the LTE UE further complete security authentication includes:
converting, by the access network element, the LTE AKA authentication response into a UMTS AKA authentication response, and sending the UMTS AKA authentication response to the SGSN; comparing, by the SGSN, the RES with the XRES to determine whether they are the same; when a result of the comparing is that they are the same, sending, by the SGSN, the CK and/or the IK to the access network element; generating, by the access network element, the K_{ASME} according to the CK and/or the IK; and sharing, by the access network element and the LTE UE, the K_{ASME}.

In a fourth possible implementation manner, with reference to the third possible implementation manner of the first aspect, the comparing, by the SGSN, the RES with the XRES to determine whether they are the same further includes: when the result of the comparing is that they are different, suspending security authentication.

In a fifth possible implementation manner, with reference to the first aspect or any one of the first to the fourth possible implementation manners of the first aspect, that the request for a special authentication vector is sent by the proxy server after the proxy server receives a request for an authentication vector and is sent by an SGSN includes:
receiving, by the proxy server, the request for an authentication vector and is sent by the SGSN;
the proxy server is configured with a list, where the list includes identification information of an LTE UE that accesses a 2G/3G network;
learning, by the proxy server according to the identification information in the list, that the identification information of the LTE UE is included in the list, so that the proxy server identifies that it is the LTE UE that accesses the 2G or 3G network; and
adding, by the proxy server, indication information to the request for an authentication vector, to generate the request for a special authentication vector, where the indication information is used to instruct the HSS to generate the special authentication vector.

In a sixth possible implementation manner, with reference to the first aspect or any one of the first to the fifth possible implementation manners of the first aspect, the generating, by the HSS, a special authentication vector according to the request for a special authentication vector includes:
generating, by the HSS, an EPS AV for the LTE UE; and
converting, by the HSS, the EPS AV into a UMTS AV format, where the EPS AV that is converted into the UMTS AV format is the special authentication vector.

In a seventh possible implementation manner, with reference to the sixth possible implementation manner of the first aspect, the converting, by the HSS, the EPS AV into a UMTS AV format includes:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

In an eighth possible implementation manner, with reference to any one of the third to the seventh possible implementation manners of the first aspect, the generating, by the access network element, the K_{ASME} according to the CK and/or the IK includes:
generating, by the access network element, the K_{ASME} according to a generating rule K_{ASME} = CK∥IK and according to the CK and/or the IK.

According to a second aspect, a method for security authentication of a mobile communications system is provided and includes:
receiving, by an SGSN, a UMTS attach request message sent by an access network element, where the UMTS attach request message is obtained by the access network element by converting an attach request message sent by an LTE UE;
sending, by the SGSN, a request for an authentication vector to a proxy server, so that the proxy server receives the request for an authentication vector, and then sends a request for a special authentication vector to an HSS; and the HSS generates a special authentication vector according to the request for a special authentication vector, and then sends the special authentication vector to the proxy server; any
after receiving the special authentication vector from the proxy server, sending, by the SGSN, a UMTS AKA authentication challenge to the access network element, so that the SGSN, the access network element, and the LTE UE complete security authentication.

In a first possible implementation manner, that the SGSN, the access network element, and the LTE UE complete security authentication includes:
converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that includes the RES to the access network element, so that the access network element, the SGSN, and the LTE UE further complete security authentication.

In a second possible implementation manner, with reference to the second aspect or the first possible implementation manner of the second aspect, the special authentication vector includes an XRES, a CK, and an IK; and
that the access network element, the SGSN, and the LTE UE further complete security authentication includes:
converting, by the access network element, the LTE AKA authentication response into a UMTS AKA authentication response, and sending the UMTS AKA authentication response to the SGSN; comparing, by the SGSN, the RES with the XRES to determine whether they are the same; when a result of the comparing is that they are the same, sending, by the SGSN, the CK and/or the IK to the access network element; generating, by the access network element, the K_{ASME} according to the CK and/or the IK; and sharing, by the access network element and the LTE UE, the K_{ASME}.

In a third possible implementation manner, with reference to the second possible implementation manner of the second aspect, the comparing, by the SGSN, the RES with the XRES to determine whether they are the same further includes: when the result of the comparing is that they are different, suspending security authentication.

In a fourth possible implementation manner, with reference to the second aspect or any one of the first to the third possible implementation manners of the second aspect, that the proxy server receives the request for an authentication vector, and then sends a request for a special authentication vector to an HSS includes:
the proxy server is configured with a list, where the list includes identification information of an LTE UE that accesses a 2G/3G network;
learning, by the proxy server according to the identification information in the list, that the identification information of the LTE UE is included in the list, so that the proxy server identifies that it is the LTE UE that accesses the 2G or 3G network; and
adding, by the proxy server, indication information to the request for an authentication vector, to generate the request for a special authentication vector, where the indication information is used to instruct the HSS to generate the special authentication vector.

In a fifth possible implementation manner, with reference to the second aspect or the first to the fourth possible implementation manners of the second aspect, that the HSS generates a special authentication vector according to the request for a special authentication vector includes:
generating, by the HSS, an EPS AV for the LTE UE; and
converting, by the HSS, the EPS AV into a UMTS AV format, where the EPS AV that is converted into the UMTS AV format is the special authentication vector.

In a sixth possible implementation manner, with reference to the fifth possible implementation manner of the second aspect, the converting, by the HSS, the EPS AV into a UMTS AV format includes:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

In a seventh possible implementation manner, with reference to any one of the second to the sixth possible implementation manners of the second aspect, the generating, by the access network element, the K_{ASME} according to the CK and/or the IK includes:
generating, by the access network element, the K_{ASME} according to a generating rule K_{ASME} = CK∥IK and according to the CK and/or the IK.

According to a third aspect, a method for security authentication of a mobile communications system is provided and includes:
converting, by an access network element, an attach request message from an LTE UE into a UMTS attach request message;
sending, by the access network element, the UMTS attach request message to an SGSN, so that the SGSN receives the UMTS attach request message, and then sends a request for an authentication vector to a proxy server; the proxy server receives the request for an authentication vector, and then sends a request for a special authentication vector to an HSS; and the HSS generates a special authentication vector according to the request for a special authentication vector, and then sends the special authentication vector to the proxy server;
receiving, by the access network element, a UMTS AKA authentication challenge, where the UMTS AKA authentication challenge is sent by the SGSN after the SGSN sends, to the SGSN, the special authentication vector that is sent by the proxy server; and
converting, by the access network element, the UMTS AKA authentication challenge into an LTE AKA authentication challenge, and then sending the LTE AKA authentication challenge to the LTE UE, so that the access network element, the SGSN, and the LTE UE complete security authentication.

In a first possible implementation manner, that the access network element, the SGSN, and the LTE UE complete security authentication includes:
verifying, by the LTE UE, the LTE AKA authentication challenge, and then generating a RES and a key K_{ASME}; and
receiving, by the access network element, an LTE AKA authentication response that includes the RES and is sent by the LTE UE, so that the access network element, the SGSN, and the LTE UE further complete security authentication.

In a second possible implementation manner, with reference to the third aspect or the first possible implementation manner of the third aspect, the special authentication vector includes an XRES, a CK, and an IK; and
that the access network element, the SGSN, and the LTE UE further complete security authentication includes:
converting, by the access network element, the LTE AKA authentication response that includes the RES into a UMTS AKA authentication response that includes the RES, and sending the UMTS AKA authentication response that includes the RES to the SGSN, so that the SGSN compares the RES with the XRES to determine whether they are the same, and when a result of the comparing is that they are the same, sending, by the SGSN, the CK and/or the IK to the access network element; and
generating, by the access network element, the K_{ASME} according to the CK and/or the IK, and sharing, by the access network element and the LTE UE, the K_{ASME}.

In a third possible implementation manner, with reference to the second possible implementation manner of the third aspect, that the SGSN compares the RES with the XRES to determine whether they are the same further includes: when the result of the comparing is that they are different, suspending security authentication.

In a fourth possible implementation manner, with reference to the third aspect or any one of the first to the third possible implementation manners of the third aspect, that the proxy server receives the request for an authentication vector, and then sends a request for a special authentication vector to an HSS includes:
the proxy server is configured with a list, where the list includes identification information of an LTE UE that accesses a 2G/3G network;
learning, by the proxy server according to the identification information in the list, that the identification information of the LTE UE is included in the list, so that the proxy server identifies that it is the LTE UE that accesses the 2G or 3G network; and
adding, by the proxy server, indication information to the request for an authentication vector, to generate the request for a special authentication vector, where the indication information is used to instruct the HSS to generate the special authentication vector.

In a fifth possible implementation manner, with reference to the third aspect or any one of the first to the fourth possible implementation manners of the third aspect, that the HSS generates a special authentication vector according to the request for a special authentication vector includes:
generating, by the HSS, an EPS AV for the LTE UE; and
converting, by the HSS, the EPS AV into a UMTS AV format, where the EPS AV that is converted into the UMTS AV format is the special authentication vector.

In a sixth possible implementation manner, with reference to the fifth possible implementation manner of the third aspect, the converting, by the HSS, the EPS AV into a UMTS AV format includes:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

In a seventh possible implementation manner, with reference to any one of the second to the sixth possible implementation manners of the third aspect, the generating, by the access network element, the K_{ASME} according to the CK and/or the IK includes:
generating, by the access network element, the K_{ASME} according to a generating rule K_{ASME} = CK∥IK and according to the CK and/or the IK.

According to a fourth aspect, a method for security authentication of a mobile communications system is provided and includes:
receiving, by a proxy server, a request for an authentication vector and is sent by an SGSN, where the request for an authentication vector is sent by the SGSN after the SGSN receives a UMTS attach request message sent by an access network element;
sending, by the proxy server, a request for a special authentication vector to an HSS, so that the HSS generates a special authentication vector according to the request for a special authentication vector; and
after receiving the special authentication vector sent by the HSS, sending, by the proxy server, the special authentication vector to the SGSN, so that the SGSN, the access network element, and an LTE UE complete security authentication.

In a first possible implementation manner, the UMTS attach request message is obtained by the access network element by converting an attach request message, and the attach request message is sent by the LTE UE.

In a second possible implementation manner, with reference to the fourth aspect or the first possible implementation manner of the fourth aspect, that the SGSN, the access network element, and an LTE UE complete security authentication includes:
sending, by the SGSN, a UMTS AKA authentication challenge to the access network element; converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that includes the RES to the access network element, so that the access network element, the SGSN, and the LTE UE further complete security authentication.

In a third possible implementation manner, with reference to the fourth aspect or the first to the second possible implementation manners of the fourth aspect, the special authentication vector includes an XRES, a CK, and an IK; and
that the access network element, the SGSN, and the LTE UE further complete security authentication includes:
converting, by the access network element, the LTE AKA authentication response into a UMTS AKA authentication response, and sending the UMTS AKA authentication response to the SGSN; comparing, by the SGSN, the RES with the XRES to determine whether they are the same; when a result of the comparing is that they are the same, sending, by the SGSN, the CK and/or the IK to the access network element; generating, by the access network element, the K_{ASME} according to the CK and/or the IK; and sharing, by the access network element and the LTE UE, the K_{ASME}.

In a fourth possible implementation manner, with reference to the third possible implementation manner of the fourth aspect, the comparing, by the SGSN, the RES with the XRES to determine whether they are the same further includes: when the result of the comparing is that they are different, suspending security authentication.

In a fifth possible implementation manner, with reference to the fourth aspect or any one of the first to the fourth possible implementation manners of the fourth aspect, the sending, by the proxy server, a request for a special authentication vector to an HSS includes:
the proxy server is configured with a list, where the list includes identification information of an LTE UE that accesses a 2G/3G network;
learning, by the proxy server according to the identification information in the list, that the identification information of the LTE UE is included in the list, so that the proxy server identifies that it is the LTE UE that accesses the 2G or 3G network; and
adding, by the proxy server, indication information to the request for an authentication vector, to generate the request for a special authentication vector, where the indication information is used to instruct the HSS to generate the special authentication vector.

In a sixth possible implementation manner, with reference to the fourth aspect or any one of the first to the fifth possible implementation manners of the fourth aspect, the generating, by the HSS, a special authentication vector includes:
generating, by the HSS, an EPS AV for the LTE UE; and
converting, by the HSS, the EPS AV into a UMTS AV format, where the EPS AV that is converted into the UMTS AV format is the special authentication vector.

In a seventh possible implementation manner, with reference to the sixth possible implementation manner of the fourth aspect, the converting, by the HSS, the EPS AV into a UMTS AV format includes:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

In an eighth possible implementation manner, with reference to any one of the third to the seventh possible implementation manners of the fourth aspect, the generating, by the access network element, the K_{ASME} according to the CK and/or the IK includes:
generating, by the access network element, the K_{ASME} according to a generating rule K_{ASME} = CK∥IK and according to the CK and/or the IK.

According to a fifth aspect, a method for security authentication of a mobile communications system is provided and includes a receiving module, a processing module, and a sending module, where:
the receiving module is configured to receive a request for a special authentication vector and is sent by a proxy server, where the request for a special authentication vector is sent by the proxy server after the proxy server receives a request for an authentication vector and is sent by an SGSN;
the processing module is configured to generate a special authentication vector according to the request for a special authentication vector; and
the sending module is configured to send the special authentication vector to the proxy server, so that the proxy server, an access network element, the SGSN, and an LTE UE complete security authentication.

In a first possible implementation manner, the request for an authentication vector is sent by the SGSN to the proxy server after the SGSN receives a UMTS attach request message sent by the access network element, the UMTS attach request message is obtained by the access network element by converting an attach request message, and the attach request message is sent by the LTE UE.

In a second possible implementation manner, with reference to the fifth aspect or the first possible implementation manner of the fifth aspect, that the proxy server, an access network element, the SGSN, and an LTE UE complete security authentication includes:
sending, by the proxy server, the special authentication vector to the SGSN; sending, by the SGSN, a UMTS AKA authentication challenge to the access network element; converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that includes the RES to the access network element, so that the access network element, the SGSN, and the LTE UE further complete security authentication.

In a third possible implementation manner, with reference to the fifth aspect or the first to the second possible implementation manners of the fifth aspect, the special authentication vector includes an XRES, a CK, and an IK; and
that the access network element, the SGSN, and the LTE UE further complete security authentication includes:
converting, by the access network element, the LTE AKA authentication response into a UMTS AKA authentication response, and sending the UMTS AKA authentication response to the SGSN; comparing, by the SGSN, the RES with the XRES to determine whether they are the same; when a result of the comparing is that they are the same, sending, by the SGSN, the CK and/or the IK to the access network element; generating, by the access network element, the K_{ASME} according to the CK and/or the IK; and sharing, by the access network element and the LTE UE, the K_{ASME}.

In a fourth possible implementation manner, with reference to the third possible implementation manner of the fifth aspect, the comparing, by the SGSN, the RES with the XRES to determine whether they are the same further includes: when the result of the comparing is that they are different, suspending security authentication.

In a fifth possible implementation manner, with reference to the fifth aspect or any one of the first to the fourth possible implementation manners of the fifth aspect, that the request for a special authentication vector is sent by the proxy server after the proxy server receives a request for an authentication vector and is sent by an SGSN includes:
receiving, by the proxy server, the request for an authentication vector and is sent by the SGSN;
identifying, by the proxy server, that it is the LTE UE that accesses a 2G or 3G network; and
adding, by the proxy server, indication information to the authentication vector, to generate the request for a special authentication vector, where the indication information is used to instruct the HSS to generate the special authentication vector.

In a sixth possible implementation manner, with reference to the fifth aspect or any one of the first to the fifth possible implementation manners of the fifth aspect, that the processing module is configured to generate a special authentication vector according to the request for a special authentication vector includes:
the processing module is configured to generate an EPS AV for the LTE UE; and
the processing module is configured to convert the EPS AV into a UMTS AV format, where the EPS AV that is converted into the UMTS AV format is the special authentication vector.

In a seventh possible implementation manner, with reference to the sixth possible implementation manner of the fifth aspect, that the processing module is configured to convert the EPS AV into a UMTS AV format includes:
the processing module is configured to: use a RAND of the EPS AV as a RAND of the UMTS AV, use an AUTN of the EPS AV as an AUTN of the UMTS AV, use an XRES of the EPS AV as an XRES of the UMTS AV, divide a K_{ASME} of the EPS AV into two parts, and use the two parts as the CK and the IK of the UMTS AV respectively.

In an eighth possible implementation manner, with reference to any one of the third to the seventh possible implementation manners of the fifth aspect, the generating, by the access network element, the K_{ASME} according to the CK and/or the IK includes:
generating, by the access network element, the K_{ASME} according to a generating rule K_{ASME} = CK∥IK and according to the CK and/or the IK.

According to a sixth aspect, an SGSN is provided and includes a receiving module and a sending module, where:
the receiving module is configured to receive a UMTS attach request message sent by an access network element, where the UMTS attach request message is obtained by the access network element by converting an attach request message sent by an LTE UE;
the sending module is configured to send a request for an authentication vector to a proxy server, so that the proxy server receives the request for an authentication vector, and then sends a request for a special authentication vector to an HSS; and the HSS generates a special authentication vector according to the request for a special authentication vector, and then sends the special authentication vector to the proxy server; and
the receiving module is further configured to receive the special authentication vector from the proxy server, and the sending module is further configured to: after the receiving module receives the special authentication vector, send a UMTS AKA authentication challenge to the access network element, so that the SGSN, the access network element, and the LTE UE complete security authentication.

In a first possible implementation manner, that the SGSN, the access network element, and the LTE UE complete security authentication includes:
converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that includes the RES to the access network element, so that the access network element, the SGSN, and the LTE UE further complete security authentication.

In a second possible implementation manner, with reference to the sixth aspect or the first possible implementation manner of the sixth aspect, the SGSN further includes a processing module;
the special authentication vector includes an XRES, a CK, and an IK; and
that the access network element, the SGSN, and the LTE UE further complete security authentication includes:
the access network element converts the LTE AKA authentication response into a UMTS AKA authentication response, and sends the UMTS AKA authentication response to the receiving module; the processing module is configured to compare the RES with the XRES to determine whether they are the same; when a result of the comparing is that they are the same, the sending module sends the CK and/or the IK to the access network element; the access network element generates the K_{ASME} according to the CK and/or the IK, where the CK and/or the IK is sent by the sending module; and the access network element and the LTE UE share the K_{ASME}.

In a third possible implementation manner, with reference to the second possible implementation manner of the sixth aspect, that the processing module is configured to compare the RES with the XRES to determine whether they are the same further includes: when the result of the comparing is that they are different, suspending security authentication.

In a fourth possible implementation manner, with reference to the sixth aspect or any one of the first to the third possible implementation manners of the sixth aspect, that the proxy server receives the request for an authentication vector, and then sends a request for a special authentication vector to an HSS includes:
the proxy server is configured with a list, where the list includes identification information of an LTE UE that accesses a 2G/3G network;
learning, by the proxy server according to the identification information in the list, that the identification information of the LTE UE is included in the list, so that the proxy server identifies that it is the LTE UE that accesses the 2G or 3G network; and
adding, by the proxy server, indication information to the request for an authentication vector, to generate the request for a special authentication vector, where the indication information is used to instruct the HSS to generate the special authentication vector.

In a fifth possible implementation manner, with reference to the sixth aspect or the first to the fourth possible implementation manners of the sixth aspect, that the HSS generates a special authentication vector according to the request for a special authentication vector includes:
generating, by the HSS, an EPS AV for the LTE UE; and
converting, by the HSS, the EPS AV into a UMTS AV format, where the EPS AV that is converted into the UMTS AV format is the special authentication vector.

In a sixth possible implementation manner, with reference to the fifth possible implementation manner of the sixth aspect, the converting, by the HSS, the EPS AV into a UMTS AV format includes:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

In a seventh possible implementation manner, with reference to any one of the second to the sixth possible implementation manners of the sixth aspect, that the access network element generates the K_{ASME} according to the CK and/or the IK includes:
generating, by the access network element, the K_{ASME} according to a generating rule K_{ASME} = CK∥IK and according to the CK and/or the IK.

According to a seventh aspect, an access network element is provided and includes a receiving module, a processing module, and a sending module, where:
the receiving module is configured to receive an attach request message from an LTE UE, and the processing module is configured to convert the attach request message into a UMTS attach request message;
the sending module is configured to send the UMTS attach request message to an SGSN, so that the SGSN receives the UMTS attach request message, and then sends a request for an authentication vector to a proxy server; the proxy server receives the request for an authentication vector, and then sends a request for a special authentication vector to an HSS; and the HSS generates a special authentication vector according to the request for a special authentication vector, and then sends the special authentication vector to the proxy server;
the receiving module is further configured to receive a UMTS AKA authentication challenge, where the UMTS AKA authentication challenge is sent by the SGSN after the SGSN sends, to the SGSN, the special authentication vector that is sent by the proxy server; and
the processing module is further configured to convert the UMTS AKA authentication challenge into an LTE AKA authentication challenge, and the sending module is further configured to send the LTE AKA authentication challenge to the LTE UE, so that the access network element, the SGSN, and the LTE UE complete security authentication.

In a first possible implementation manner, that the access network element, the SGSN, and the LTE UE complete security authentication includes:
the LTE UE verifies the LTE AKA authentication challenge, and then generates a RES and a key K_{ASME}; and
the receiving module is configured to receive an LTE AKA authentication response that includes the RES and is sent by the LTE UE, so that the access network element, the SGSN, and the LTE UE further complete security authentication.

In a second possible implementation manner, with reference to the seventh aspect or the first possible implementation manner of the seventh aspect, the special authentication vector includes an XRES, a CK, and an IK; and
that the access network element, the SGSN, and the LTE UE further complete security authentication includes:
the processing module is further configured to convert the LTE AKA authentication response that includes the RES into a UMTS AKA authentication response that includes the RES, and the sending module is further configured to send the UMTS AKA authentication response that includes the RES to the SGSN, so that the SGSN compares the RES with the XRES to determine whether they are the same, and when a result of the comparing is that they are the same, the SGSN sends the CK and/or the IK to the access network element; and
the processing module is further configured to generate the K_{ASME} according to the CK and/or the IK, and the access network element and the LTE UE share the K_{ASME}.

In a third possible implementation manner, with reference to the second possible implementation manner of the seventh aspect, that the SGSN compares the RES with the XRES to determine whether they are the same further includes: when the result of the comparing is that they are different, suspending security authentication.

In a fourth possible implementation manner, with reference to the seventh aspect or any one of the first to the third possible implementation manners of the seventh aspect, that the proxy server receives the request for an authentication vector, and then sends a request for a special authentication vector to an HSS includes:
the proxy server is configured with a list, where the list includes identification information of an LTE UE that accesses a 2G/3G network;
learning, by the proxy server according to the identification information in the list, that the identification information of the LTE UE is included in the list, so that the proxy server identifies that it is the LTE UE that accesses the 2G or 3G network; and
adding, by the proxy server, indication information to the request for an authentication vector, to generate the request for a special authentication vector, where the indication information is used to instruct the HSS to generate the special authentication vector.

In a fifth possible implementation manner, with reference to the seventh aspect or any one of the first to the fourth possible implementation manners of the seventh aspect, that the HSS generates a special authentication vector according to the request for a special authentication vector includes:
generating, by the HSS, an EPS AV for the LTE UE; and
converting, by the HSS, the EPS AV into a UMTS AV format, where the EPS AV that is converted into the UMTS AV format is the special authentication vector.

In a sixth possible implementation manner, with reference to the fifth possible implementation manner of the seventh aspect, the converting, by the HSS, the EPS AV into a UMTS AV format includes:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} (256 bits) of the EPS AV into two parts, and using the two parts as the CK and the IK of the UMTS AV respectively.

In a seventh possible implementation manner, with reference to any one of the second to the sixth possible implementation manners of the seventh aspect, the processing module is further configured to generate the K_{ASME} according to a generating rule K_{ASME} = CK∥IK and according to the CK and/or the IK.

According to an eighth aspect, a proxy server of a mobile communications system is provided and includes a receiving module and a sending module, where:
the receiving module is configured to receive a request for an authentication vector and is sent by an SGSN, where the request for an authentication vector is sent by the SGSN after the SGSN receives a UMTS attach request message sent by an access network element;
the sending module is configured to send a request for a special authentication vector to an HSS, so that the HSS generates a special authentication vector according to the request for a special authentication vector; and
the receiving module is configured to receive the special authentication vector sent by the HSS, and then the proxy server sends the special authentication vector to the SGSN, so that the SGSN, the access network element, and an LTE UE complete security authentication.

In a first possible implementation manner, the UMTS attach request message is obtained by the access network element by converting an attach request message, and the attach request message is sent by the LTE UE.

In a second possible implementation manner, with reference to the eighth aspect or the first possible implementation manner of the eighth aspect, that the SGSN, the access network element, and an LTE UE complete security authentication includes:
sending, by the SGSN, a UMTS AKA authentication challenge to the access network element; converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that includes the RES to the access network element, so that the access network element, the SGSN, and the LTE UE further complete security authentication.

In a third possible implementation manner, with reference to the eighth aspect or the first to the second possible implementation manners of the eighth aspect, the special authentication vector includes an XRES, a CK, and an IK; and
that the access network element, the SGSN, and the LTE UE further complete security authentication includes:
converting, by the access network element, the LTE AKA authentication response into a UMTS AKA authentication response, and sending the UMTS AKA authentication response to the SGSN; comparing, by the SGSN, the RES with the XRES to determine whether they are the same; when a result of the comparing is that they are the same, sending, by the SGSN, the CK and/or the IK to the access network element; generating, by the access network element, the K_{ASME} according to the CK and/or the IK; and sharing, by the access network element and the LTE UE, the K_{ASME}.

In a fourth possible implementation manner, with reference to the third possible implementation manner of the eighth aspect, the comparing, by the SGSN, the RES with the XRES to determine whether they are the same further includes: when the result of the comparing is that they are different, suspending security authentication.

In a fifth possible implementation manner, with reference to the eighth aspect or any one of the first to the fourth possible implementation manners of the eighth aspect, the proxy server further includes a storage module and a processing module, where:
that the sending module is configured to send a request for a special authentication vector to an HSS includes:
   the storage module is configured to store a list, where the list includes identification information of an LTE UE that accesses a 2G/3G network;
   the processing module is configured to learn, according to the identification information in the list, that the identification information of the LTE UE is included in the list, so that the processing module is configured to identify that it is the LTE UE that accesses the 2G or 3G network; and
   the processing module is further configured to add indication information to the request for an authentication vector, to generate the request for a special authentication vector, where the indication information is used to instruct the HSS to generate the special authentication vector.

In a sixth possible implementation manner, with reference to the eighth aspect or any one of the first to the fifth possible implementation manners of the eighth aspect, the generating, by the HSS, a special authentication vector includes:
generating, by the HSS, an EPS AV for the LTE UE; and
converting, by the HSS, the EPS AV into a UMTS AV format, where the EPS AV that is converted into the UMTS AV format is the special authentication vector.

In a seventh possible implementation manner, with reference to the sixth possible implementation manner of the eighth aspect, the converting, by the HSS, the EPS AV into a UMTS AV format includes:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

In an eighth possible implementation manner, with reference to any one of the third to the seventh possible implementation manners of the eighth aspect, the generating, by the access network element, the K_{ASME} according to the CK and/or the IK includes:
generating, by the access network element, the K_{ASME} according to a generating rule K_{ASME} = CK∥IK and according to the CK and/or the IK.

By using the foregoing solutions, an LTE UE can access a 2G/3G network by means of security authentication.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for authentication of a mobile communications system according to an embodiment of the present invention;
FIG. 2 is a schematic flowchart of a method for security authentication of a mobile communications system according to another embodiment of the present invention;
FIG. 3 is a schematic flowchart of a method for security authentication of a mobile communications system according to another embodiment of the present invention;
FIG. 4 is a schematic flowchart of a method for security authentication of a mobile communications system according to another embodiment of the present invention;
FIG. 5 is a schematic flowchart of a method for security authentication of a mobile communications system according to another embodiment of the present invention;
FIG. 6 is a schematic block diagram of a home subscriber server according to an embodiment of the present invention;
FIG. 7 is a schematic block diagram of a serving GPRS support node according to an embodiment of the present invention;
FIG. 8 is a schematic block diagram of an access network element according to an embodiment of the present invention;
FIG. 9 is a schematic block diagram of a proxy server according to an embodiment of the present invention;
FIG. 10 is a schematic block diagram of a home subscriber server according to another embodiment of the present invention;
FIG. 11 is a schematic block diagram of a serving GPRS support node according to another embodiment of the present invention;
FIG. 12 is a schematic block diagram of an access network element according to another embodiment of the present invention; and
FIG. 13 is a schematic block diagram of a proxy server according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various 2G or 3G communications systems, such as a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Universal Mobile Telecommunications System (Universal Mobile Telecommunication System, "UMTS" for short), and a Worldwide Interoperability for Microwave Access (Worldwide Interoperability for Microwave Access, "WiMAX" for short) communications system.

In the embodiments of the present invention, an access network element is an enhanced access network element and is configured to support access of an LTE UE to a 2G/3G core network. In all the embodiments of the present invention, the access network element may have the following functions: a function of an LTE eNB, that is, the LTE UE can access the 2G/3G core network through the access network element, without requiring modification of the LTE UE, so that the LTE UE considers that the LTE UE is accessing an LTE network, not the 2G/3G core network. The access network element in the embodiments of the present invention may further implement some functions of a mobility management entity (Mobility Management Entity, "MME" for short), such as a function of security protection for NAS signaling.

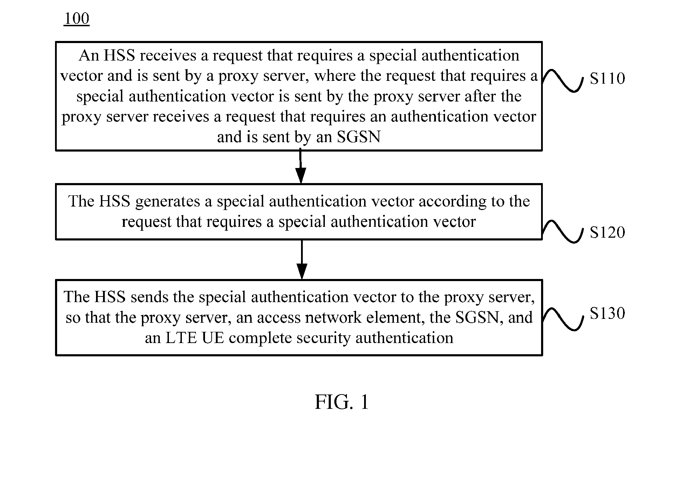

FIG. 1 shows a schematic flowchart of a method 100 for security authentication of a mobile communications system according to an embodiment of the present invention. As shown in FIG. 1, the method 100 includes:
S110. An HSS receives a request for a special authentication vector and is sent by a proxy server, where the request for a special authentication vector is sent by the proxy server after the proxy server receives a request for an authentication vector and is sent by an SGSN.
S120. The HSS generates a special authentication vector according to the request for a special authentication vector.
S130. The HSS sends the special authentication vector to the proxy server, so that the proxy server, an access network element, the SGSN, and an LTE UE complete security authentication.

In this embodiment of the present invention, to enable an LTE UE to use a 2G or 3G network, after a proxy server identifies that it is the LTE UE that accesses the 2G/3G network, an HSS generates a special authentication vector for the LTE UE, so that an SGSN, an access network element, and the LTE UE complete security authentication, to enable the LTE UE to use a 2G or 3G core network.

Optionally, the request for an authentication vector is sent by the SGSN to the proxy server after the SGSN receives a UMTS attach request message sent by the access network element, the UMTS attach request message is obtained by the access network element by converting an attach request message, and the attach request message is sent by the LTE UE.

Optionally, that the proxy server, an access network element, the SGSN, and an LTE UE complete security authentication includes the following:

The proxy server sends the special authentication vector to the SGSN; the SGSN sends a UMTS AKA authentication challenge to the access network element; the access network element converts the UMTS AKA authentication challenge into an LTE AKA authentication challenge, and then sends the LTE AKA authentication challenge to the LTE UE; and the LTE UE performs verification according to the LTE AKA authentication challenge and generates a RES and a key K_{ASME}, and then sends an LTE AKA authentication response that includes the RES to the access network element, so that the access network element, the SGSN, and the LTE UE further complete security authentication.

Optionally, the special authentication vector includes an XRES, a CK, and an IK.

Optionally, that the access network element, the SGSN, and the LTE UE further complete security authentication includes the following:

The access network element converts the LTE AKA authentication response into a UMTS AKA authentication response, and sends the UMTS AKA authentication response to the SGSN; the SGSN compares the RES with the XRES to determine whether they are the same; when a result of the comparing is that they are the same, the SGSN sends the CK and/or the IK to the access network element; the access network element generates the K_{ASME} according to the CK and/or the IK; and the access network element and the LTE UE share the K_{ASME}.

Optionally, that the SGSN compares the RES with the XRES to determine whether they are the same further includes the following: when the result of the comparing is that they are different, security authentication is suspended.

Optionally,
that the request for a special authentication vector is sent by the proxy server after the proxy server receives a request for an authentication vector and is sent by an SGSN includes the following:

The proxy server receives the request for an authentication vector and is sent by the SGSN;
the proxy server is configured with a list, where the list includes identification information of an LTE UE that accesses a 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate the request for a special authentication vector, where the indication information is used to instruct the HSS to generate the special authentication vector.

Optionally, that the HSS generates a special authentication vector according to the request for a special authentication vector includes the following:

The HSS generates an EPS AV for the LTE UE; and
the HSS converts the EPS AV into a UMTS AV format, where the EPS AV that is converted into the UMTS AV format is the special authentication vector.

Optionally, that the HSS converts the EPS AV into a UMTS AV format includes the following:

The HSS uses a RAND of the EPS AV as a RAND of the UMTS AV, uses an AUTN of the EPS AV as an AUTN of the UMTS AV, uses an XRES of the EPS AV as an XRES of the UMTS AV, divides a K_{ASME} of the EPS AV into two parts, and uses the two parts as the CK and the IK of the UMTS AV respectively.

Optionally, that the access network element generates the K_{ASME} according to the CK and/or the IK includes the following:

The access network element generates the K_{ASME} according to a generating rule K_{ASME} = CK∥IK and according to the CK and/or the IK.

In this embodiment of the present invention, an access network element converts a message sent by an LTE UE into a message that is applicable to a 2G or 3G network, and after a proxy server identifies a scenario in which the LTE UE accesses the 2G or 3G network through the access network element, an HSS generates a special authentication vector to complete, by using the access network element and an SGSN, security authentication between the LTE UE and a network. The LTE UE does not need to be modified, so that the LTE UE can access a 2G or 3G core network through the access network element in this embodiment, complete security authentication, and use a 2G or 3G core network resource.

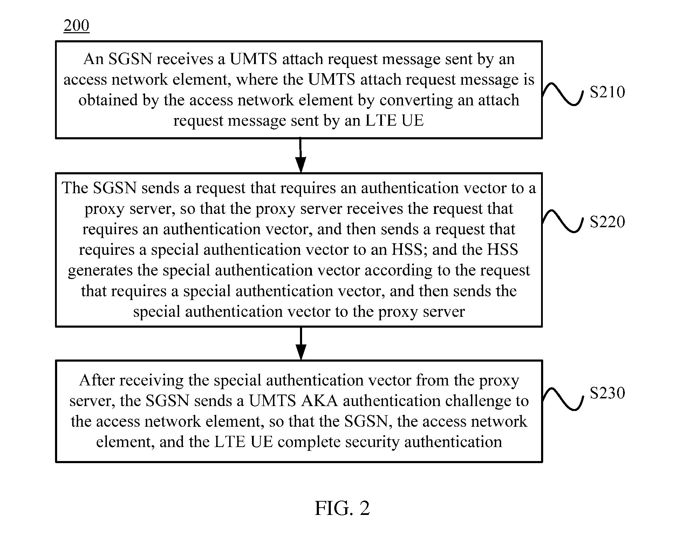

FIG. 2 shows a schematic flowchart of a method 200 for security authentication of a mobile communications system according to an embodiment of the present invention. FIG. 2 and the method revealed in descriptions of FIG. 2 may be based on FIG. 1 in embodiments of the present invention and the method revealed in FIG. 1 in the embodiments of the present invention. As shown in FIG. 2, the method 200 includes the following:
S210. An SGSN receives a UMTS attach request message sent by an access network element, where the UMTS attach request message is obtained by the access network element by converting an attach request message sent by an LTE UE.
S220. The SGSN sends a request for an authentication vector to a proxy server, so that the proxy server receives the request for an authentication vector, and then sends a request for a special authentication vector to an HSS; and the HSS generates a special authentication vector according to the request for a special authentication vector, and then sends the special authentication vector to the proxy server.
S230. After receiving the special authentication vector from the proxy server, the SGSN sends a UMTS AKA authentication challenge to the access network element, so that the SGSN, the access network element, and the LTE UE complete security authentication.

In this embodiment of the present invention, after identifying a scenario in which an LTE UE accesses a 2G or 3G core network, a proxy server makes a request to an HSS for a special authentication vector, and the HSS generates a special authentication vector according to the request of an SGSN, so that the SGSN, an access network element, and the LTE UE complete security authentication, to enable the LTE UE to use the 2G or 3G core network without requiring modification of the LTE UE.

Optionally, that the SGSN, the access network element, and the LTE UE complete security authentication includes the following:

The access network element converts the UMTS AKA authentication challenge into an LTE AKA authentication challenge, and then sends the LTE AKA authentication challenge to the LTE UE; and the LTE UE performs verification according to the LTE AKA authentication challenge and generates a RES and a key K_{ASME}, and then sends an LTE AKA authentication response that includes the RES to the access network element, so that the access network element, the SGSN, and the LTE UE further complete security authentication.

Optionally, the special authentication vector includes an XRES, a CK, and an IK.

Optionally, that the access network element, the SGSN, and the LTE UE further complete security authentication includes the following:

The access network element converts the LTE AKA authentication response into a UMTS AKA authentication response, and sends the UMTS AKA authentication response to the SGSN; the SGSN compares the RES with the XRES to determine whether they are the same; when a result of the comparing is that they are the same, the SGSN sends the CK and/or the IK to the access network element; the access network element generates the K_{ASME} according to the CK and/or the IK; and the access network element and the LTE UE share the K_{ASME}.

Optionally, that the SGSN compares the RES with the XRES to determine whether they are the same further includes the following: when the result of the comparing is that they are different, security authentication is suspended.

Optionally,
that the proxy server receives the request for an authentication vector, and then sends a request for a special authentication vector to an HSS includes the following:

the proxy server is configured with a list, where the list includes identification information of an LTE UE that accesses a 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate the request for a special authentication vector, where the indication information is used to instruct the HSS to generate the special authentication vector.

Optionally, that the HSS generates a special authentication vector according to the request for a special authentication vector includes the following:

The HSS generates an EPS AV for the LTE UE; and
the HSS converts the EPS AV into a UMTS AV format, where the EPS AV that is converted into the UMTS AV format is the special authentication vector.

Optionally, that the HSS converts the EPS AV into a UMTS AV format includes the following:

The HSS uses a RAND of the EPS AV as a RAND of the UMTS AV, uses an AUTN of the EPS AV as an AUTN of the UMTS AV, uses an XRES of the EPS AV as an XRES of the UMTS AV, divides a K_{ASME} of the EPS AV into two parts, and uses the two parts as the CK and the IK of the UMTS AV respectively.

Optionally, that the access network element generates the K_{ASME} according to the CK and/or the IK includes the following:
The access network element generates the K_{ASME} according to a generating rule K_{ASME} = CK∥IK and according to the CK and/or the IK.

In this embodiment of the present invention, an access network element converts a message sent by an LTE UE into a message that is applicable to a 2G or 3G network, and after the access network element identifies a scenario in which the LTE UE accesses the 2G or 3G network through the access network element, an HSS generates a special authentication vector to complete, by using the access network element and an SGSN, security authentication between the LTE UE and a network. The LTE UE does not need to be modified, so that the LTE UE can access a 2G or 3G core network through the access network element in this embodiment, complete security authentication, and use a 2G or 3G core network resource.

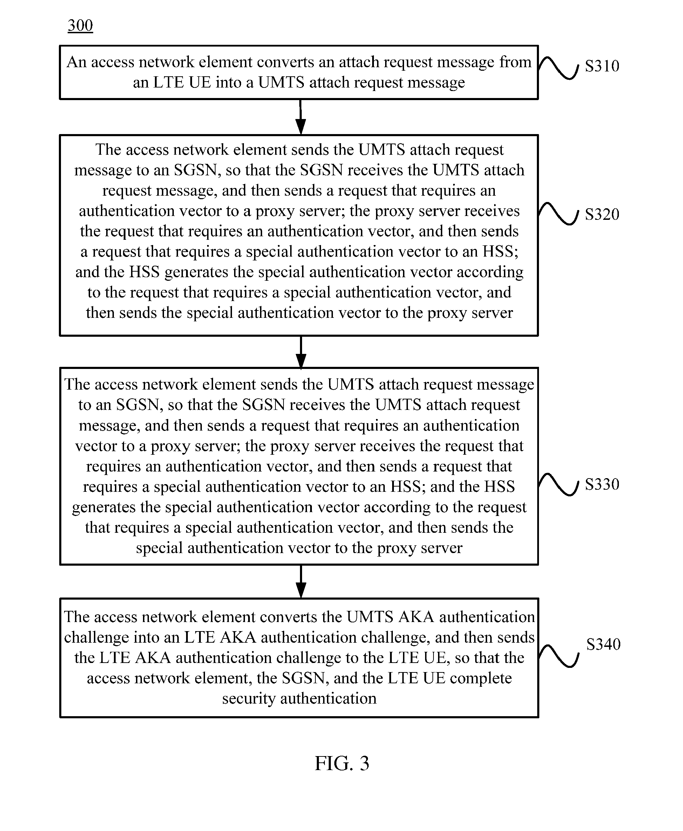

FIG. 3 shows a schematic flowchart of a method 300 for security authentication of a mobile communications system according to an embodiment of the present invention. FIG. 3 and the method revealed in descriptions of FIG. 3 may be based on FIG. 1 to FIG. 2 in embodiments of the present invention and the methods revealed in FIG. 1 to FIG. 2 in the embodiments of the present invention. As shown in FIG. 3, the method 300 includes:
S310. An access network element converts an attach request message from an LTE UE into a UMTS attach request message.
S320. The access network element sends the UMTS attach request message to an SGSN, so that the SGSN receives the UMTS attach request message, and then sends a request for an authentication vector to a proxy server; the proxy server receives the request for an authentication vector, and then sends a request for a special authentication vector to an HSS; and the HSS generates a special authentication vector according to the request for a special authentication vector, and then sends the special authentication vector to the proxy server.
S330. The access network element receives a UMTS AKA authentication challenge, where the UMTS AKA authentication challenge is sent by the SGSN after the SGSN sends, to the SGSN, the special authentication vector that is sent by the proxy server.
S340. The access network element converts the UMTS AKA authentication challenge into an LTE AKA authentication challenge, and then sends the LTE AKA authentication challenge to the LTE UE, so that the access network element, the SGSN, and the LTE UE complete security authentication.

In this embodiment of the present invention, an access network element converts information sent by an LTE UE into information that is applicable to a 2G or 3G network system, a proxy server identifies a scenario in which the LTE UE accesses a 2G or 3G network; and an HSS generates a special authentication vector, so that the access network element, an SGSN, and the LTE UE can complete security authentication, to enable the LTE UE to use an existing 2G or 3G core network.

Optionally, that the access network element, the SGSN, and the LTE UE complete security authentication includes the following:

The LTE UE verifies the LTE AKA authentication challenge, and then generates a RES and a key K_{ASME}; and
the access network element receives an LTE AKA authentication response that includes the RES and is sent by the LTE UE, so that the access network element, the SGSN, and the LTE UE further complete security authentication.

Optionally, the special authentication vector includes an XRES, a CK, and an IK.

Optionally, that the access network element, the SGSN, and the LTE UE further complete security authentication includes the following:

The access network element converts the LTE AKA authentication response that includes the RES into a UMTS AKA authentication response that includes the RES, and sends the UMTS AKA authentication response that includes the RES to the SGSN, so that the SGSN compares the RES with the XRES to determine whether they are the same, and when a result of the comparing is that they are the same, the SGSN sends the CK and/or the IK to the access network element; and
the access network element generates the K_{ASME} according to the CK and/or the IK, and the access network element and the LTE UE share the K_{ASME}.

Optionally, that the SGSN compares the RES with the XRES to determine whether they are the same further includes the following: when the result of the comparing is that they are different, security authentication is suspended.

That the proxy server receives the request for an authentication vector, and then sends a request for a special authentication vector to an HSS includes the following:

The proxy server is configured with a list, where the list includes identification information of an LTE UE that accesses a 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate the request for a special authentication vector, where the indication information is used to instruct the HSS to generate the special authentication vector.

Optionally, that the HSS generates a special authentication vector according to the request for a special authentication vector includes the following:

The HSS generates an EPS AV for the LTE UE; and
the HSS converts the EPS AV into a UMTS AV format, where the EPS AV that is converted into the UMTS AV format is the special authentication vector.

Optionally, that the HSS converts the EPS AV into a UMTS AV format includes the following:

The HSS uses a RAND of the EPS AV as a RAND of the UMTS AV, uses an AUTN of the EPS AV as an AUTN of the UMTS AV, uses an XRES of the EPS AV as an XRES of the UMTS AV, divides a K_{ASME} of the EPS AV into two parts, and uses the two parts as the CK and the IK of the UMTS AV respectively.

Optionally, that the access network element generates the K_{ASME} according to the CK and/or the IK includes the following:

The access network element generates the K_{ASME} according to a generating rule K_{ASME} = CK∥IK and according to the CK and/or the IK.

In this embodiment of the present invention, an access network element converts a message sent by an LTE UE into a message that is applicable to a 2G or 3G network, and after the access network element identifies a scenario in which the LTE UE accesses a 2G or 3G core network through the access network element, an HSS generates a special authentication vector to complete, by using the access network element and an SGSN, security authentication between the LTE UE and a network. The LTE UE does not need to be modified, so that the LTE UE can access the 2G or 3G core network through the access network element in this embodiment, complete security authentication, and use a 2G or 3G core network resource.

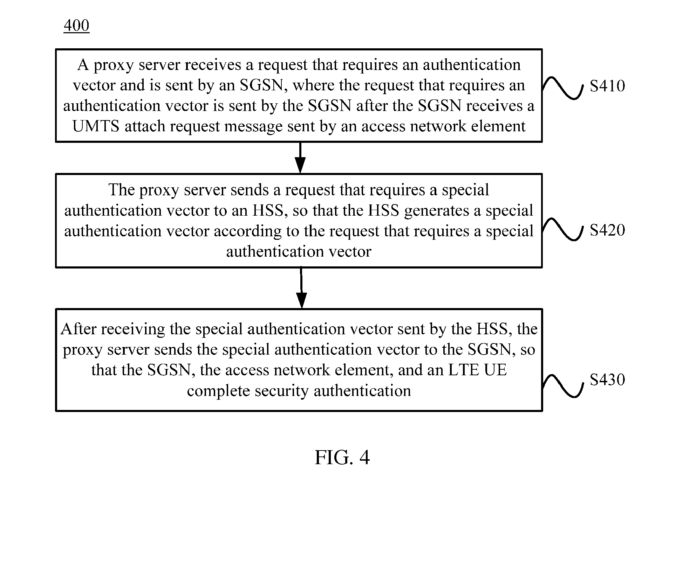

FIG. 4 shows a schematic flowchart of a method 400 for security authentication of a mobile communications system according to an embodiment of the present invention. FIG. 4 and the method revealed in FIG. 4 may be based on FIG. 1 to FIG. 3 in embodiments of the present invention and the methods revealed in FIG. 1 to FIG. 3 in the embodiments of the present invention. Reference may be made to FIG. 4 and the method revealed in descriptions of FIG. 4. As shown in FIG. 4, the method 400 includes:
S410. A proxy server receives a request for an authentication vector and is sent by an SGSN, where the request for an authentication vector is sent by the SGSN after the SGSN receives a UMTS attach request message sent by an access network element.
S420. The proxy server sends a request for a special authentication vector to an HSS, so that the HSS generates a special authentication vector according to the request for a special authentication vector.
S430. After receiving the special authentication vector sent by the HSS, the proxy server sends the special authentication vector to the SGSN, so that the SGSN, the access network element, and an LTE UE complete security authentication.

In this embodiment of the present invention, a proxy server identifies a scenario in which an LTE UE accesses a 2G or 3G network; and an HSS is required to generate a special authentication vector, so that an access network element, an SGSN, and the LTE UE can complete security authentication, to enable the LTE UE to use an existing 2G or 3G core network.

Optionally, the UMTS attach request message is obtained by the access network element by converting an attach request message, and the attach request message is sent by the LTE UE.

Optionally, that the SGSN, the access network element, and an LTE UE complete security authentication includes the following:

The SGSN sends a UMTS AKA authentication challenge to the access network element; the access network element converts the UMTS AKA authentication challenge into an LTE AKA authentication challenge, and then sends the LTE AKA authentication challenge to the LTE UE; and the LTE UE performs verification according to the LTE AKA authentication challenge and generates a RES and a key K_{ASME}, and then sends an LTE AKA authentication response that includes the RES to the access network element, so that the access network element, the SGSN, and the LTE UE further complete security authentication.

Optionally, the special authentication vector includes an XRES, a CK, and an IK.

Optionally, that the access network element, the SGSN, and the LTE UE further complete security authentication includes the following:

The access network element converts the LTE AKA authentication response into a UMTS AKA authentication response, and sends the UMTS AKA authentication response to the SGSN; the SGSN compares the RES with the XRES to determine whether they are the same; when a result of the comparing is that they are the same, the SGSN sends the CK and/or the IK to the access network element; the access network element generates the K_{ASME} according to the CK and/or the IK; and the access network element and the LTE UE share the K_{ASME}.

Optionally, that the SGSN compares the RES with the XRES to determine whether they are the same further includes the following: when the result of the comparing is that they are different, security authentication is suspended.

Optionally, that the proxy server sends a request for a special authentication vector to an HSS includes the following:

The proxy server is configured with a list, where the list includes identification information of an LTE UE that accesses a 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate the request for a special authentication vector, where the indication information is used to instruct the HSS to generate the special authentication vector.

Optionally, that the HSS generates a special authentication vector includes the following:
The HSS generates an EPS AV for the LTE UE; and
the HSS converts the EPS AV into a UMTS AV format, where the EPS AV that is converted into the UMTS AV format is the special authentication vector.

Optionally, that the HSS converts the EPS AV into a UMTS AV format includes the following:
The HSS uses a RAND of the EPS AV as a RAND of the UMTS AV, uses an AUTN of the EPS AV as an AUTN of the UMTS AV, uses an XRES of the EPS AV as an XRES of the UMTS AV, divides a K_{ASME} of the EPS AV into two parts, and uses the two parts as the CK and the IK of the UMTS AV respectively.

Optionally, that the access network element generates the K_{ASME} according to the CK and/or the IK includes the following:
The access network element generates the K_{ASME} according to a generating rule K_{ASME} = CK∥IK and according to the CK and/or the IK.

In this embodiment of the present invention, an access network element converts a message sent by an LTE UE into a message that is applicable to a 2G or 3G network, and after a proxy server identifies a scenario in which the LTE UE accesses a 2G or 3G core network through the access network element, an HSS generates a special authentication vector to complete, by using the access network element and an SGSN, security authentication between the LTE UE and a network. The LTE UE does not need to be modified, so that the LTE UE can access the 2G or 3G core network through the access network element in this embodiment, complete security authentication, and use a 2G or 3G core network resource.

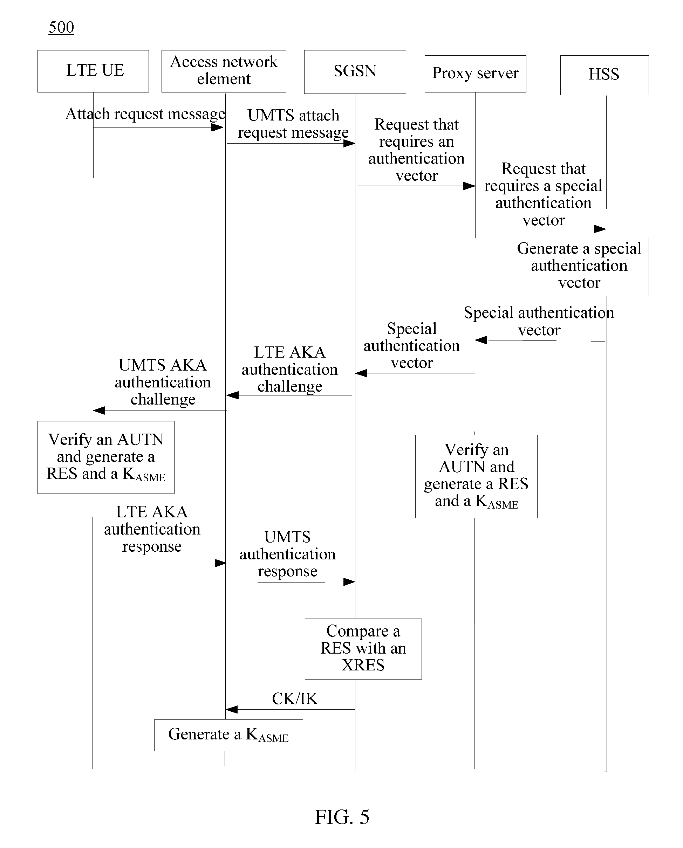

FIG. 5 shows a schematic flowchart of a method 500 for security authentication of a mobile communications system according to an embodiment of the present invention. FIG. 1 to FIG. 4 in embodiments of the present invention and the methods revealed based on FIG. 1 to FIG. 4 in the embodiments of the present invention are descriptions from different perspectives of the methods disclosed in the embodiments of the present invention. For FIG. 1 to FIG. 4 in the embodiments and the methods revealed based on FIG. 1 to FIG. 4 in the embodiments of the present invention, refer to FIG. 5 and the method revealed in descriptions of FIG. 5. As shown in FIG. 5, the method 500 includes the following:

Optionally, an LTE UE accesses a 2G/3G core network through an access network element, and an RRC connection is established between the LTE UE and the access network element.

The LTE UE sends an attach request message to the access network element, the access network element converts the attach request message received from the LTE UE into a UMTS attach request message that can be identified by an SGSN on the 2G/3G core network in a UMTS system, and the access network element sends, to the SGSN, the UMTS attach request message after the conversion.

The SGSN sends a request for an authentication vector to a proxy server, and the proxy server receives the request for an authentication vector and is sent by the SGSN.

The proxy server identifies that it is the LTE UE that accesses a 2G or 3G network. Further,
the proxy server is configured with a list, where the list includes identification information of the LTE UE that accesses the 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate a request for a special authentication vector, where the indication information is used to instruct an HSS to generate the special authentication vector.

The HSS identifies, according to the indication information in the request for a special authentication vector and is sent by the proxy server, a scenario in which the LTE UE accesses the 2G/3G network. That the HSS generates the special authentication vector includes the following:

Optionally, the HSS generates an EPS AV for the LTE UE.

Further,
the HSS sets the 0^{th} bit of an authentication management field AMF to 1, to indicate that this authentication vector is the EPS AV.

The HSS generates a RAND, an AUTN, a CK, an IK, and an XRES.

The HSS derives a K_{ASME} according to the CK and the IK, and a derivation rule may be K_{ASME}= KDF (CK, IK), where KDF is a key derivation function.

The EPS AV consists of the K_{ASME}, the AUTN, the XRES, and the RAND, where a value of the 0^{th} bit of an AMF parameter in the AUTN is 1.

Optionally, the HSS converts the EPS AV into a UMTS AV format, so that the EPS AV can be sent to the SGSN by using an existing UMTS authentication response. A method for converting the EPS AV into the UMTS AV format includes: using the RAND, the AUTN, and the XRES of the EPS AV as a RAND, an AUTN, and an XRES of a UMTS AV; and dividing the K_{ASME} (256 bits) of the EPS AV into two parts, and using the two parts as the CK (128 bits) and the IK (128 bits) of the UMTS AV respectively. After the EPS AV is converted into the UMTS AV format, a value of the 0^{th} bit of an AMF in the AUTN is still 1. A vector obtained after the EPS AV is converted into the UMTS AV format is the special authentication vector.

The HSS transmits the special authentication vector to the proxy server, and the proxy server further sends the special authentication vector to the SGSN.

The SGSN executes a UMTS AKA authentication procedure according to the special authentication vector that is received from the access network element. The SGSN sends a UMTS AKA authentication challenge to the access network element, where the UMTS AKA authentication challenge includes the RAND and the AUTN.

The access network element converts the received UMTS AKA authentication challenge into an LTE AKA authentication challenge. The RAND and the AUTN in the UMTS AKA authentication challenge are placed in the LTE AKA authentication challenge and the LTE AKA authentication response is sent to the LTE UE.

The LTE UE verifies the AUTN. Further, because the value of the 0^{th} bit of the AMF in the AUTN is 1, a check on the AMF by the LTE UE passes. The LTE UE generates an RES and the key K_{ASME}.

The LTE UE sends the LTE AKA authentication response to the access network element, where the LTE AKA authentication response includes the RES.

The access network element converts the LTE AKA authentication response into a UMTS AKA authentication response, places, in the UMTS AKA authentication response, the RES in the LTE AKA authentication response, and sends the LTE AKA authentication response to the SGSN.

The SGSN compares the RES with the XRES to determine whether they are the same.

Optionally, if a result of the comparing is that the RES and the XRES are different, security authentication is suspended.

Optionally, if a result of the comparing is that the RES and the XRES are the same, the SGSN initiates a security mode process. During the security mode process, the CK and/or the IK is sent to the access network element.

Optionally, the access network element generates the K_{ASME} according to the CK and/or the IK. Optionally, a generating rule for generating the K_{ASME} by the access network element according to the CK and/or the IK is K_{ASME}= CK∥IK, where "∥" indicates a serial connection, that is, adding the IK to the end of the CK.

The access network element and the LTE UE share the key K_{ASME}.

Optionally, an LTE NAS SMC procedure and an LTE AS SMC procedure are executed between the access network element and the LTE UE to establish LTE air interface security.

In this embodiment of the present invention, an access network element converts a message sent by an LTE UE into a message that is applicable to a 2G or 3G network, and after a proxy server identifies a scenario in which the LTE UE accesses a 2G or 3G core network through the access network element, an HSS generates a special authentication vector to complete, by using the access network element and an SGSN, security authentication between the LTE UE and a network. The LTE UE does not need to be modified, so that the LTE UE can access the 2G or 3G core network through the access network element in this embodiment, complete security authentication, and use a 2G or 3G core network resource.

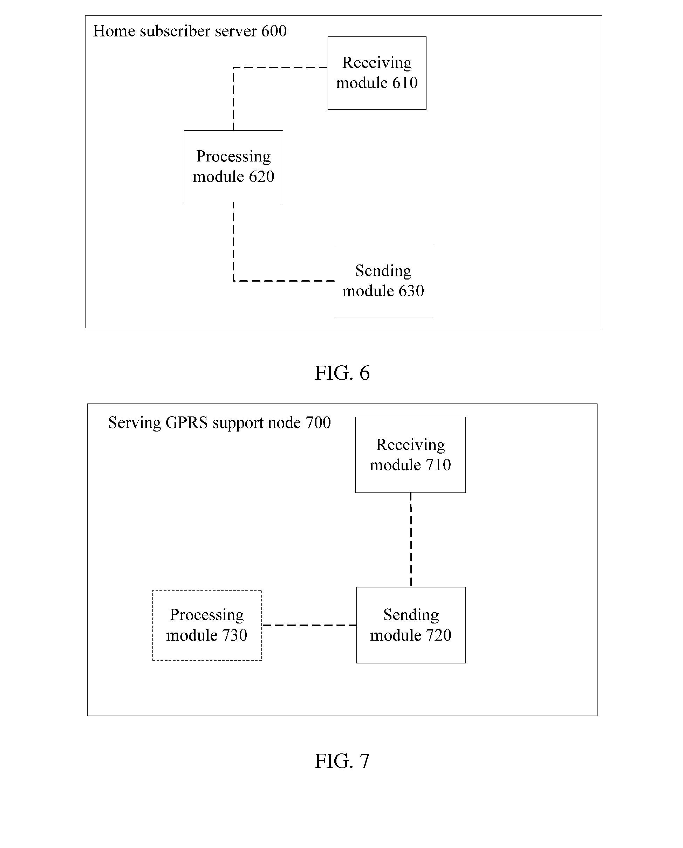

FIG. 6 shows a schematic block diagram of a home subscriber server 600 for security authentication of a mobile communications system according to an embodiment of the present invention. FIG. 6 and the apparatus revealed in descriptions of FIG. 6 may be based on FIG. 1 to FIG. 5 in embodiments of the present invention and the methods revealed in FIG. 1 to FIG. 5 in the embodiments of the present invention. As shown in FIG. 6, the home subscriber server HSS 600 includes a receiving module 610, a processing module 620, and a sending module 630.

The receiving module 610 is configured to receive a request for a special authentication vector and is sent by a proxy server, where the request for a special authentication vector is sent by an access network element after the access network element receives a request for an authentication vector and is sent by an SGSN.

The processing module 620 is configured to generate a special authentication vector according to the request for a special authentication vector.

The sending module 630 is configured to send the special authentication vector to the proxy server, so that the proxy server, an access network element, the SGSN, and an LTE UE complete security authentication.

In this embodiment of the present invention, to enable an LTE UE to use a 2G or 3G network, after a proxy server identifies that it is the LTE UE that accesses a 2G/3G core network, an HSS generates a special authentication vector for the LTE UE, so that an SGSN, an access network element, and the LTE UE complete security authentication, to enable the LTE UE to use the 2G or 3G core network.

Optionally, the request for an authentication vector is sent by the SGSN to the proxy server after the SGSN receives a UMTS attach request message sent by the access network element, the UMTS attach request message is obtained by the access network element by converting an attach request message, and the attach request message is sent by the LTE UE.

Optionally,
that the proxy server, an access network element, the SGSN, and an LTE UE complete security authentication includes the following:

The proxy server sends the special authentication vector to the SGSN; the SGSN sends a UMTS AKA authentication challenge to the access network element; the access network element converts the UMTS AKA authentication challenge into an LTE AKA authentication challenge, and then sends the LTE AKA authentication challenge to the LTE UE; and the LTE UE performs verification according to the LTE AKA authentication challenge and generates a RES and a key K_{ASME}, and then sends an LTE AKA authentication response that includes the RES to the access network element, so that the access network element, the SGSN, and the LTE UE further complete security authentication.

Optionally, the special authentication vector includes an XRES, a CK, and an IK.

Optionally, that the access network element, the SGSN, and the LTE UE further complete security authentication includes the following:

The access network element converts the LTE AKA authentication response into a UMTS AKA authentication response, and sends the UMTS AKA authentication response to the SGSN; the SGSN compares the RES with the XRES to determine whether they are the same; when a result of the comparing is that they are the same, the SGSN sends the CK and/or the IK to the access network element; the access network element generates the K_{ASME} according to the CK and/or the IK; and the access network element and the LTE UE share the K_{ASME}.

Optionally, that the SGSN compares the RES with the XRES to determine whether they are the same further includes the following: when the result of the comparing is that they are different, security authentication is suspended.

Optionally, that the request for a special authentication vector is sent by the proxy server after the proxy server receives a request for an authentication vector and is sent by an SGSN includes the following:

the proxy server is configured with a list, where the list includes identification information of an LTE UE that accesses a 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate the request for a special authentication vector, where the indication information is used to instruct the HSS to generate the special authentication vector.

Optionally, that the processing module 620 is configured to generate a special authentication vector according to the request for a special authentication vector includes the following:

The processing module 620 is configured to generate an EPS AV for the LTE UE.

Further,
the processing module 620 is configured to set the 0^{th} bit of an authentication management field AMF to 1, to indicate that this authentication vector is the EPS AV.

The processing module 620 is configured to generate a RAND, an AUTN, the CK, the IK, and the XRES.

The processing module 620 is configured to derive the K_{ASME} according to the CK and the IK, and a derivation rule may be K_{ASME}= KDF (CK, IK), where KDF is a key derivation function.

The EPS AV consists of the K_{ASME}, the AUTN, the XRES, and the RAND, where a value of the 0^{th} bit of an AMF parameter in the AUTN is 1.

Optionally, the processing module 620 is configured to convert the EPS AV into a UMTS AV format, so that the EPS AV can be sent to the SGSN by using an existing UMTS authentication response. A method for converting the EPS AV into the UMTS AV format includes: using the RAND, the AUTN, and the XRES of the EPS AV as a RAND, an AUTN, and an XRES of a UMTS AV; and dividing the K_{ASME} (256 bits) of the EPS AV into two parts, and using the two parts as the CK (128 bits) and the IK (128 bits) of the UMTS AV respectively. After the EPS AV is converted into the UMTS AV format, a value of the 0^{th} bit of an AMF in the AUTN is still 1. A vector obtained after the EPS AV is converted into the UMTS AV format is the special authentication vector. Optionally, that the access network element generates the K_{ASME} according to the CK and/or the IK includes the following:

The access network element generates the K_{ASME} according to a generating rule K_{ASME} = CK∥IK and according to the CK and/or the IK, where "∥" indicates a serial connection, that is, adding the IK to the end of the CK.

In this embodiment of the present invention, an access network element converts a message sent by an LTE UE into a message that is applicable to a 2G or 3G network, and after a proxy server identifies a scenario in which the LTE UE accesses the 2G or 3G network through the access network element, an HSS generates a special authentication vector to complete, by using the access network element and an SGSN, security authentication between the LTE UE and a network. The LTE UE does not need to be modified, so that the LTE UE can access a 2G or 3G core network through the access network element in this embodiment, complete security authentication, and use a 2G or 3G core network resource.

FIG. 7 shows a schematic block diagram of a serving GPRS support node 700 for security authentication of a mobile communications system according to an embodiment of the present invention. FIG. 7 and the apparatus revealed in descriptions of FIG. 7 may be based on FIG. 1 to FIG. 5 in embodiments of the present invention and the methods revealed in FIG. 1 to FIG. 5 in the embodiments of the present invention, or may be based on FIG. 6 in the embodiments of the present invention and the apparatus revealed in FIG. 6. As shown in FIG. 7, the serving GPRS support node SGSN 600 includes a receiving module 710 and a sending module 720.

The receiving module 710 is configured to receive a UMTS attach request message sent by an access network element, where the UMTS attach request message is obtained by the access network element by converting an attach request message sent by an LTE UE.

The sending module 720 is configured to send a request for an authentication vector to a proxy server, so that the proxy server receives the request for an authentication vector, and then sends a request for a special authentication vector to an HSS; and the HSS generates a special authentication vector according to the request for a special authentication vector, and then sends the special authentication vector to the proxy server.

The receiving module 710 is further configured to receive the special authentication vector from the proxy server, and the sending module 720 is further configured to: after the receiving module 710 receives the special authentication vector, send a UMTS AKA authentication challenge to the access network element, so that the SGSN, the access network element, and the LTE UE complete security authentication.

In this embodiment of the present invention, after identifying a scenario in which an LTE UE accesses a 2G or 3G network, a proxy server makes a request to an HSS for a special authentication vector, and the HSS generates a special authentication vector according to the request, so that an SGSN, an access network element, and the LTE UE complete security authentication, to enable the LTE UE to use a 2G or 3G core network without requiring modification of the LTE UE.

Optionally, that the SGSN, the access network element, and the LTE UE complete security authentication includes the following:

The access network element converts the UMTS AKA authentication challenge into an LTE AKA authentication challenge, and then sends the LTE AKA authentication challenge to the LTE UE; and the LTE UE performs verification according to the LTE AKA authentication challenge and generates a RES and a key K_{ASME}, and then sends an LTE AKA authentication response that includes the RES to the access network element, so that the access network element, the SGSN, and the LTE UE further complete security authentication.

Optionally, the SGSN further includes a processing module 730.

Optionally, the special authentication vector includes an XRES, a CK, and an IK.

Optionally, that the access network element, the SGSN, and the LTE UE further complete security authentication includes the following:

The access network element converts the LTE AKA authentication response into a UMTS AKA authentication response, and sends the UMTS AKA authentication response to the receiving module 710; the processing module 730 is configured to compare the RES with the XRES to determine whether they are the same; when a result of the comparing is that they are the same, the sending module 720 sends the CK and/or the IK to the access network element; the access network element generates the K_{ASME} according to the CK and/or the IK, where the CK and/or the IK is sent by the sending module 720; and the access network element and the LTE UE share the K_{ASME}.

Optionally, that the processing module 730 is configured to compare the RES with the XRES to determine whether they are the same further includes the following: when the result of the comparing is that they are different, security authentication is suspended.

Optionally, that the proxy server receives the request for an authentication vector, and then sends a request for a special authentication vector to an HSS includes the following:

the proxy server is configured with a list, where the list includes identification information of an LTE UE that accesses a 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate the request for a special authentication vector, where the indication information is used to instruct the HSS to generate the special authentication vector.

Optionally, that the HSS generates a special authentication vector according to the request for a special authentication vector includes the following:

The HSS generates an EPS AV for the LTE UE; and
the HSS converts the EPS AV into a UMTS AV format, where the EPS AV that is converted into the UMTS AV format is the special authentication vector.

Optionally, that the HSS converts the EPS AV into a UMTS AV format includes the following:
The HSS uses a RAND of the EPS AV as a RAND of the UMTS AV, uses an AUTN of the EPS AV as an AUTN of the UMTS AV, uses an XRES of the EPS AV as an XRES of the UMTS AV, divides a K_{ASME} of the EPS AV into two parts, and uses the two parts as the CK and the IK of the UMTS AV respectively.

Optionally, that the access network element generates the K_{ASME} according to the CK and/or the IK includes the following:
The access network element generates the K_{ASME} according to a generating rule K_{ASME} = CK∥IK and according to the CK and/or the IK.

In this embodiment of the present invention, an access network element converts a message sent by an LTE UE into a message that is applicable to a 2G or 3G network, and after a proxy server identifies a scenario in which the LTE UE accesses a 2G or 3G core network through the access network element, an HSS generates a special authentication vector to complete, by using the access network element and an SGSN, security authentication between the LTE UE and a network. The LTE UE does not need to be modified, so that the LTE UE can access the 2G or 3G core network through the access network element in this embodiment, complete security authentication, and use a 2G or 3G core network resource.

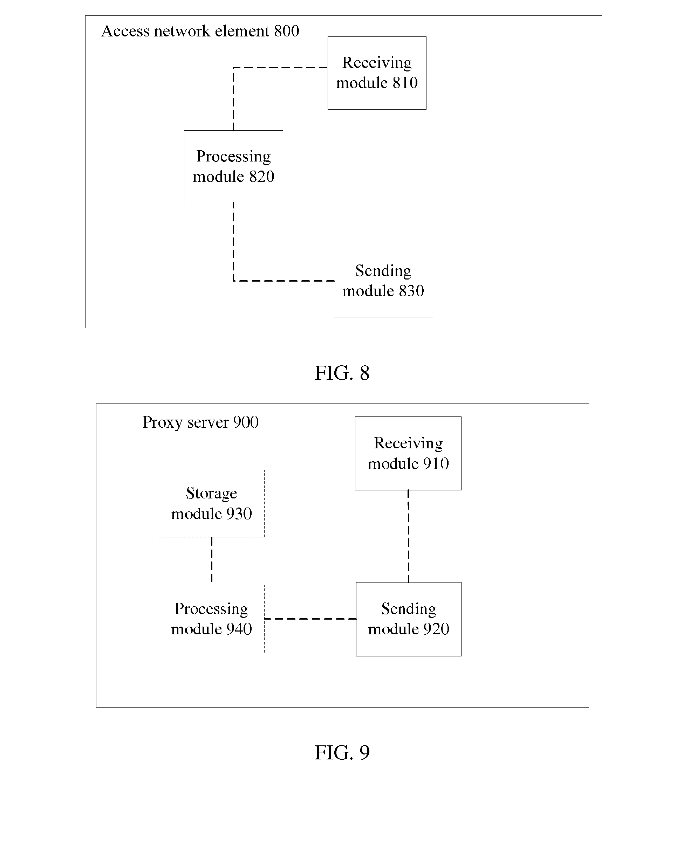

FIG. 8 shows a schematic block diagram of an access network element 800 for security authentication of a mobile communications system according to an embodiment of the present invention. FIG. 8 and the apparatus revealed in descriptions of FIG. 8 may be based on FIG. 1 to FIG. 5 in embodiments of the present invention and the methods revealed in FIG. 1 to FIG. 5 in the embodiments of the present invention, or may be based on FIG. 6 to FIG. 7 in the embodiments of the present invention and the apparatuses revealed in FIG. 6 to FIG. 7. As shown in FIG. 8, the access network element 800 includes a receiving module 810, a processing module 820, and a sending module 830.

The receiving module 810 is configured to receive an attach request message from an LTE UE, and the processing module 820 is configured to convert the attach request message into a UMTS attach request message.

The sending module 830 is configured to send the UMTS attach request message to an SGSN, so that the SGSN receives the UMTS attach request message, and then sends a request for an authentication vector to a proxy server; the proxy server receives the request for an authentication vector, and then sends a request for a special authentication vector to an HSS; and the HSS generates a special authentication vector according to the request for a special authentication vector, and then sends the special authentication vector to the proxy server.

The receiving module 810 is further configured to receive a UMTS AKA authentication challenge, where the UMTS AKA authentication challenge is sent by the SGSN after the SGSN sends, to the SGSN, the special authentication vector that is sent by the proxy server.

The processing module 820 is further configured to convert the UMTS AKA authentication challenge into an LTE AKA authentication challenge, and the sending module 830 is further configured to send the LTE AKA authentication challenge to the LTE UE, so that the access network element, the SGSN, and the LTE UE complete security authentication.

In this embodiment of the present invention, an access network element converts information sent by an LTE UE into information that is applicable to a 2G or 3G network system, the access network element identifies a scenario in which the LTE UE accesses a 2G or 3G network; and an HSS generates a special authentication vector, so that the access network element, an SGSN, and the LTE UE can complete security authentication, to enable the LTE UE to use an existing 2G or 3G core network.

Optionally, that the access network element, the SGSN, and the LTE UE complete security authentication includes the following:

The LTE UE verifies the LTE AKA authentication challenge, and then generates a RES and a key K_{ASME}; and
the receiving module 810 is configured to receive an LTE AKA authentication response that includes the RES and is sent by the LTE UE, so that the access network element, the SGSN, and the LTE UE further complete security authentication.

Optionally, the special authentication vector includes an XRES, a CK, and an IK.

Optionally, that the access network element, the SGSN, and the LTE UE further complete security authentication includes the following:

The processing module 820 is further configured to convert the LTE AKA authentication response that includes the RES into a UMTS AKA authentication response that includes the RES, and the sending module 830 is further configured to send the UMTS AKA authentication response that includes the RES to the SGSN, so that the SGSN compares the RES with the XRES to determine whether they are the same, and when a result of the comparing is that they are the same, the SGSN sends the CK and/or the IK to the access network element; and
the processing module 820 is further configured to generate the K_{ASME} according to the CK and/or the IK, and the access network element and the LTE UE share the K_{ASME}.

Optionally, that the SGSN compares the RES with the XRES to determine whether they are the same further includes the following: when the result of the comparing is that they are different, security authentication is suspended.

Optionally,
that the proxy server receives the request for an authentication vector, and then sends a request for a special authentication vector to an HSS includes the following:

the proxy server is configured with a list, where the list includes identification information of an LTE UE that accesses a 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate the request for a special authentication vector, where the indication information is used to instruct the HSS to generate the special authentication vector.

Optionally, that the HSS generates a special authentication vector according to the request for a special authentication vector includes the following:

The HSS generates an EPS AV for the LTE UE; and
the HSS converts the EPS AV into a UMTS AV format, where the EPS AV that is converted into the UMTS AV format is the special authentication vector.

Optionally, that the HSS converts the EPS AV into a UMTS AV format includes the following:

The HSS uses a RAND of the EPS AV as a RAND of the UMTS AV, uses an AUTN of the EPS AV as an AUTN of the UMTS AV, uses an XRES of the EPS AV as an XRES of the UMTS AV, divides a K_{ASME} (256 bits) of the EPS AV into two parts, and uses the two parts as the CK and the IK of the UMTS AV respectively.

Optionally, the processing module 820 is further configured to generate the K_{ASME} according to a generating rule K_{ASME}= CK∥IK and according to the CK and/or the IK, where "∥" indicates a serial connection, that is, adding the IK to the end of the CK.

In this embodiment of the present invention, an access network element converts a message sent by an LTE UE into a message that is applicable to a 2G or 3G network, and after the access network element identifies a scenario in which the LTE UE accesses the 2G or 3G network through the access network element, an HSS generates a special authentication vector to complete, by using the access network element and an SGSN, security authentication between the LTE UE and a network. The LTE UE does not need to be modified, so that the LTE UE can access a 2G or 3G core network through the access network element in this embodiment, complete security authentication, and use a 2G or 3G core network resource.

FIG. 9 shows a schematic block diagram of a proxy server 900 of a mobile communications system according to an embodiment of the present invention. FIG. 9 and the method revealed in descriptions of FIG. 9 may be based on FIG. 1 to FIG. 5 in embodiments of the present invention and the methods revealed in FIG. 1 to FIG. 5 in the embodiments of the present invention, or may be based on FIG. 6 to FIG. 8 in the embodiments of the present invention and the apparatuses revealed in FIG. 6 to FIG. 8 in the embodiments of the present invention. As shown in FIG. 9, the proxy server 900 includes a receiver 1310 and a transmitter 1320.

The receiver 1310 is configured to receive a request for an authentication vector and is sent by an SGSN, where the request for an authentication vector is sent by the SGSN after the SGSN receives a UMTS attach request message sent by an access network element.

The transmitter 1320 is configured to send a request for a special authentication vector to an HSS, so that the HSS generates a special authentication vector according to the request for a special authentication vector.

The receiver 1310 is further configured to receive the special authentication vector sent by the HSS, and then the proxy server sends the special authentication vector to the SGSN, so that the SGSN, the access network element, and an LTE UE complete security authentication.

In this embodiment of the present invention, a proxy server identifies a scenario in which an LTE UE accesses a 2G or 3G network; and an HSS is required to generate a special authentication vector, so that an access network element, an SGSN, and the LTE UE can complete security authentication, to enable the LTE UE to use an existing 2G or 3G core network.

Optionally, the UMTS attach request message is obtained by the access network element by converting an attach request message, and the attach request message is sent by the LTE UE.

Optionally, that the SGSN, the access network element, and an LTE UE complete security authentication includes the following:

The SGSN sends a UMTS AKA authentication challenge to the access network element; the access network element converts the UMTS AKA authentication challenge into an LTE AKA authentication challenge, and then sends the LTE AKA authentication challenge to the LTE UE; and the LTE UE performs verification according to the LTE AKA authentication challenge and generates a RES and a key K_{ASME}, and then sends an LTE AKA authentication response that includes the RES to the access network element, so that the access network element, the SGSN, and the LTE UE further complete security authentication.

Optionally, the special authentication vector includes an XRES, a CK, and an IK.

Optionally, that the access network element, the SGSN, and the LTE UE further complete security authentication includes the following:

The access network element converts the LTE AKA authentication response into a UMTS AKA authentication response, and sends the UMTS AKA authentication response to the SGSN; the SGSN compares the RES with the XRES to determine whether they are the same; when a result of the comparing is that they are the same, the SGSN sends the CK and/or the IK to the access network element; the access network element generates the K_{ASME} according to the CK and/or the IK; and the access network element and the LTE UE share the K_{ASME}.

Optionally, that the SGSN compares the RES with the XRES to determine whether they are the same further includes the following: when the result of the comparing is that they are different, security authentication is suspended.

Optionally, the proxy server may further include a memory 1330 and a processor 1340, and that the transmitter 1320 is configured to send a request for a special authentication vector to an HSS includes the following:

The memory 1330 is configured to store a list, where the list includes identification information of an LTE UE that accesses a 2G/3G network;
the processor 1340 is configured to learn, according to the identification information in the list, that the identification information of the LTE UE is included in the list, so that the processor 1340 identifies that it is the LTE UE that accesses the 2G or 3G network; and
the processor 1340 is further configured to add indication information to the request for an authentication vector, to generate the request for a special authentication vector, where the indication information is used to instruct the HSS to generate the special authentication vector.

Optionally, that the HSS generates a special authentication vector includes the following:

The HSS generates an EPS AV for the LTE UE; and
the HSS converts the EPS AV into a UMTS AV format, where the EPS AV that is converted into the UMTS AV format is the special authentication vector.

Optionally, that the HSS converts the EPS AV into a UMTS AV format includes the following:

The HSS uses a RAND of the EPS AV as a RAND of the UMTS AV, uses an AUTN of the EPS AV as an AUTN of the UMTS AV, uses an XRES of the EPS AV as an XRES of the UMTS AV, divides a K_{ASME} of the EPS AV into two parts, and uses the two parts as the CK and the IK of the UMTS AV respectively.

Optionally, that the access network element generates the K_{ASME} according to the CK and/or the IK includes the following:

The access network element generates the K_{ASME} according to a generating rule K_{ASME} = CK∥IK and according to the CK and/or the IK.

In this embodiment of the present invention, an access network element converts a message sent by an LTE UE into a message that is applicable to a 2G or 3G network, and after a proxy server identifies a scenario in which the LTE UE accesses a 2G or 3G core network through the access network element, an HSS generates a special authentication vector to complete, by using the access network element and an SGSN, security authentication between the LTE UE and a network. The LTE UE does not need to be modified, so that the LTE UE can access the 2G or 3G core network through the access network element in this embodiment, complete security authentication, and use a 2G or 3G core network resource.

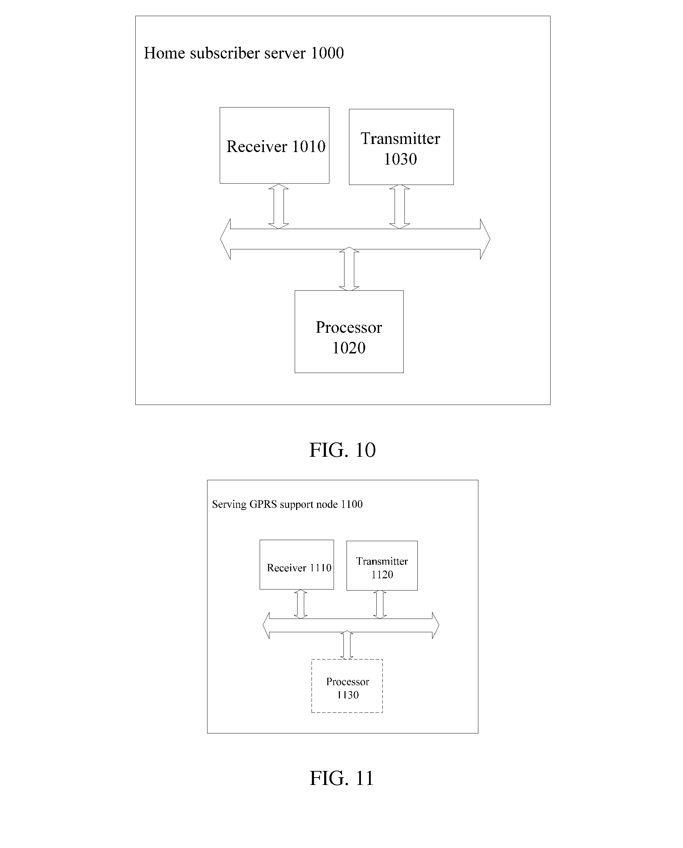

FIG. 10 shows a schematic block diagram of a home subscriber server 1000 for security authentication of a mobile communications system according to an embodiment of the present invention. FIG. 10 and the apparatus revealed in descriptions of FIG. 10 may be based on FIG. 1 to FIG. 5 in embodiments of the present invention and the methods revealed in FIG. 1 to FIG. 5 in the embodiments of the present invention, or may be based on FIG. 6 to FIG. 9 in the embodiments of the present invention and the apparatuses revealed in FIG. 6 to FIG. 9. As shown in FIG. 10, the home subscriber server HSS 1000 includes a receiver 1010, a processor 1020, and a transmitter 1030.

The receiver 1010 is configured to receive a request for a special authentication vector and is sent by a proxy server, where the request for a special authentication vector is sent by an access network element after the access network element receives a request for an authentication vector and is sent by an SGSN.

The processor 1020 is configured to generate a special authentication vector according to the request for a special authentication vector.

The transmitter 1030 is configured to send the special authentication vector to the proxy server, so that the proxy server, an access network element, the SGSN, and an LTE UE complete security authentication.

In this embodiment of the present invention, to enable an LTE UE to use a 2G or 3G network, after a proxy server identifies that it is the LTE UE that accesses a 2G/3G core network, an HSS generates a special authentication vector for the LTE UE, so that an SGSN, an access network element, and the LTE UE complete security authentication, to enable the LTE UE to use the 2G or 3G core network.

Optionally, the request for an authentication vector is sent by the SGSN to the proxy server after the SGSN receives a UMTS attach request message sent by the access network element, the UMTS attach request message is obtained by the access network element by converting an attach request message, and the attach request message is sent by the LTE UE.

Optionally,
that the proxy server, an access network element, the SGSN, and an LTE UE complete security authentication includes the following:

The proxy server sends the special authentication vector to the SGSN; the SGSN sends a UMTS AKA authentication challenge to the access network element; the access network element converts the UMTS AKA authentication challenge into an LTE AKA authentication challenge, and then sends the LTE AKA authentication challenge to the LTE UE; and the LTE UE performs verification according to the LTE AKA authentication challenge and generates a RES and a key K_{ASME}. and then sends an LTE AKA authentication response that includes the RES to the access network element, so that the access network element, the SGSN, and the LTE UE further complete security authentication.

Optionally, the special authentication vector includes an XRES, a CK, and an IK.

Optionally, that the access network element, the SGSN, and the LTE UE further complete security authentication includes the following:

The access network element converts the LTE AKA authentication response into a UMTS AKA authentication response, and sends the UMTS AKA authentication response to the SGSN; the SGSN compares the RES with the XRES to determine whether they are the same; when a result of the comparing is that they are the same, the SGSN sends the CK and/or the IK to the access network element; the access network element generates the K_{ASME} according to the CK and/or the IK; and the access network element and the LTE UE share the K_{ASME}.

Optionally, that the SGSN compares the RES with the XRES to determine whether they are the same further includes the following: when the result of the comparing is that they are different, security authentication is suspended.

Optionally, that the request for a special authentication vector is sent by the proxy server after the proxy server receives a request for an authentication vector and is sent by an SGSN includes the following:

the proxy server is configured with a list, where the list includes identification information of an LTE UE that accesses a 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate the request for a special authentication vector, where the indication information is used to instruct the HSS to generate the special authentication vector.

Optionally, that the processor 1020 is configured to generate a special authentication vector according to the request for a special authentication vector includes the following:

The processor 1020 is configured to generate an EPS AV for the LTE UE.

Further,
the processor 1020 is configured to set the 0^{th} bit of an authentication management field AMF to 1, to indicate that this authentication vector is the EPS AV.

The processor 1020 is configured to generate a RAND, an AUTN, the CK, the IK, and the XRES.

The processor 1020 is configured to derive the K_{ASME} according to the CK and the IK, and a derivation rule may be K_{ASME} = KDF (CK, IK), where KDF is a key derivation function.

The EPS AV consists of the K_{ASME}, the AUTN, the XRES, and the RAND, where a value of the 0^{th} bit of an AMF parameter in the AUTN is 1.

Optionally, the processor 1020 is configured to convert the EPS AV into a UMTS AV format, so that the EPS AV can be sent to the SGSN by using an existing UMTS authentication response. A method for converting the EPS AV into the UMTS AV format includes: using the RAND, the AUTN, and the XRES of the EPS AV as a RAND, an AUTN, and an XRES of a UMTS AV; and dividing the K_{ASME} (256 bits) of the EPS AV into two parts, and using the two parts as the CK (128 bits) and the IK (128 bits) of the UMTS AV respectively. After the EPS AV is converted into the UMTS AV format, a value of the 0^{th} bit of an AMF in the AUTN is still 1. A vector obtained after the EPS AV is converted into the UMTS AV format is the special authentication vector. Optionally, that the access network element generates the K_{ASME} according to the CK and/or the IK includes the following:

The access network element generates the K_{ASME} according to a generating rule K_{ASME} = CK∥IK and according to the CK and/or the IK, where "∥" indicates a serial connection, that is, adding the IK to the end of the CK.

In this embodiment of the present invention, an access network element converts a message sent by an LTE UE into a message that is applicable to a 2G or 3G network, and after a proxy server identifies a scenario in which the LTE UE accesses the 2G or 3G network through the access network element, an HSS generates a special authentication vector to complete, by using the access network element and an SGSN, security authentication between the LTE UE and a network. The LTE UE does not need to be modified, so that the LTE UE can access a 2G or 3G core network through the access network element in this embodiment, complete security authentication, and use a 2G or 3G core network resource.

FIG. 11 shows a schematic block diagram of a serving GPRS support node 1100 for security authentication of a mobile communications system according to an embodiment of the present invention. FIG. 11 and the apparatus revealed in descriptions of FIG. 11 may be based on FIG. 1 to FIG. 5 in embodiments of the present invention and the methods revealed in FIG. 1 to FIG. 5 in the embodiments of the present invention, or may be based on FIG. 6 to FIG. 10 in the embodiments of the present invention and the apparatuses revealed in FIG. 6 to FIG. 10. As shown in FIG. 11, the serving GPRS support node SGSN 1100 includes a receiver 1110 and a transmitter 1120.

The receiver 1110 is configured to receive a UMTS attach request message sent by an access network element, where the UMTS attach request message is obtained by the access network element by converting an attach request message sent by an LTE UE.

The transmitter 1120 is configured to send a request for an authentication vector to a proxy server, so that the proxy server receives the request for an authentication vector, and then sends a request for a special authentication vector to an HSS; and the HSS generates a special authentication vector according to the request for a special authentication vector, and then sends the special authentication vector to the proxy server.

The receiver 1110 is further configured to receive the special authentication vector from the proxy server, and the transmitter 1120 is further configured to: after the receiver 1110 receives the special authentication vector, send a UMTS AKA authentication challenge to the access network element, so that the SGSN, the access network element, and the LTE UE complete security authentication.

In this embodiment of the present invention, after identifying a scenario in which an LTE UE accesses a 2G or 3G network, a proxy server makes a request to an HSS for a special authentication vector, and the HSS generates a special authentication vector according to the request, so that an SGSN, an access network element, and the LTE UE complete security authentication, to enable the LTE UE to use a 2G or 3G core network without requiring modification of the LTE UE.

Optionally, that the SGSN, the access network element, and the LTE UE complete security authentication includes the following:

The access network element converts the UMTS AKA authentication challenge into an LTE AKA authentication challenge, and then sends the LTE AKA authentication challenge to the LTE UE; and the LTE UE performs verification according to the LTE AKA authentication challenge and generates a RES and a key K_{ASME}, and then sends an LTE AKA authentication response that includes the RES to the access network element, so that the access network element, the SGSN, and the LTE UE further complete security authentication.

Optionally, the SGSN further includes a processor 1130.

Optionally, the special authentication vector includes an XRES, a CK, and an IK.

Optionally, that the access network element, the SGSN, and the LTE UE further complete security authentication includes the following:

The access network element converts the LTE AKA authentication response into a UMTS AKA authentication response, and sends the UMTS AKA authentication response to the receiver 1110; the processor 1130 is configured to compare the RES with the XRES to determine whether they are the same; when a result of the comparing is that they are the same, the transmitter 1120 sends the CK and/or the IK to the access network element; the access network element generates the K_{ASME} according to the CK and/or the IK, where the CK and/or the IK is sent by the transmitter 1120; and the access network element and the LTE UE share the K_{ASME}.

Optionally, that the processor 1130 is configured to compare the RES with the XRES to determine whether they are the same further includes the following: when the result of the comparing is that they are different, security authentication is suspended.

Optionally, that the proxy server receives the request for an authentication vector, and then sends a request for a special authentication vector to an HSS includes the following:

the proxy server is configured with a list, where the list includes identification information of an LTE UE that accesses a 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate the request for a special authentication vector, where the indication information is used to instruct the HSS to generate the special authentication vector.

Optionally, that the HSS generates a special authentication vector according to the request for a special authentication vector includes the following:

The HSS generates an EPS AV for the LTE UE; and
the HSS converts the EPS AV into a UMTS AV format, where the EPS AV that is converted into the UMTS AV format is the special authentication vector.

Optionally, that the HSS converts the EPS AV into a UMTS AV format includes the following:
The HSS uses a RAND of the EPS AV as a RAND of the UMTS AV, uses an AUTN of the EPS AV as an AUTN of the UMTS AV, uses an XRES of the EPS AV as an XRES of the UMTS AV, divides a K_{ASME} of the EPS AV into two parts, and uses the two parts as the CK and the IK of the UMTS AV respectively.

Optionally, that the access network element generates the K_{ASME} according to the CK and/or the IK includes the following:

The access network element generates the K_{ASME} according to a generating rule K_{ASME} = CK∥IK and according to the CK and/or the IK.

In this embodiment of the present invention, an access network element converts a message sent by an LTE UE into a message that is applicable to a 2G or 3G network, and after a proxy server identifies a scenario in which the LTE UE accesses a 2G or 3G core network through the access network element, an HSS generates a special authentication vector to complete, by using the access network element and an SGSN, security authentication between the LTE UE and a network. The LTE UE does not need to be modified, so that the LTE UE can access the 2G or 3G core network through the access network element in this embodiment, complete security authentication, and use a 2G or 3G core network resource.

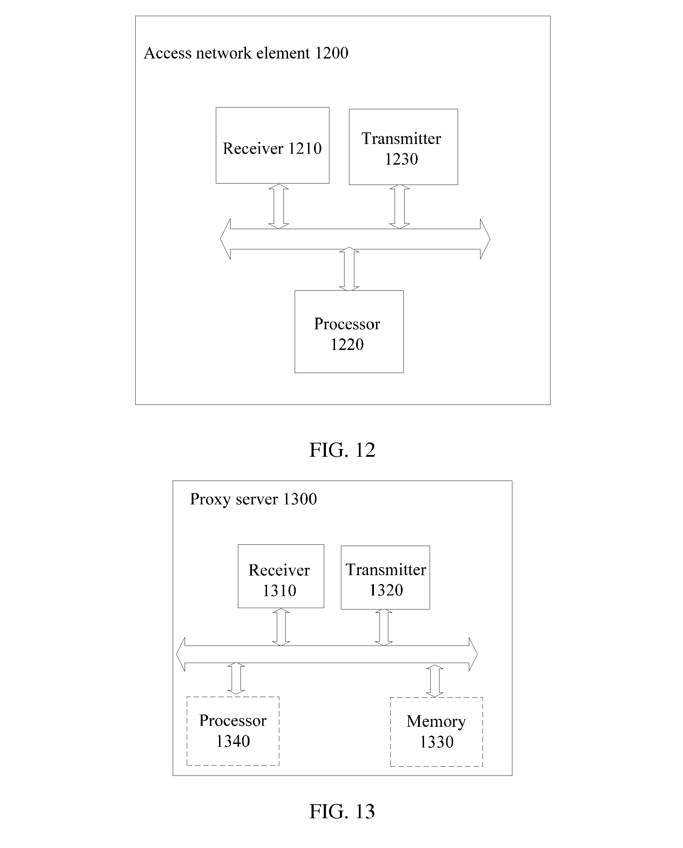

FIG. 12 shows a schematic block diagram of an access network element 1200 for security authentication of a mobile communications system according to an embodiment of the present invention. FIG. 12 and the apparatus revealed in descriptions of FIG. 12 may be based on FIG. 1 to FIG. 5 in embodiments of the present invention and the methods revealed in FIG. 1 to FIG. 5 in the embodiments of the present invention, or may be based on FIG. 6 to FIG. 11 in the embodiments of the present invention and the apparatuses revealed in FIG. 6 to FIG. 11. As shown in FIG. 8, the access network element 1200 includes a receiving module 1210, a processing module 1220, and a sending module 1230.

The receiver 1210 is configured to receive an attach request message from an LTE UE, and the processor 1220 is configured to convert the attach request message into a UMTS attach request message.

The transmitter 1230 is configured to send the UMTS attach request message to an SGSN, so that the SGSN receives the UMTS attach request message, and then sends a request for an authentication vector to a proxy server; the proxy server receives the request for an authentication vector, and then sends a request for a special authentication vector to an HSS; and the HSS generates a special authentication vector according to the request for a special authentication vector, and then sends the special authentication vector to the proxy server.

The receiver 1210 is further configured to receive a UMTS AKA authentication challenge, where the UMTS AKA authentication challenge is sent by the SGSN after the SGSN sends, to the SGSN, the special authentication vector that is sent by the proxy server.

The processor 1220 is further configured to convert the UMTS AKA authentication challenge into an LTE AKA authentication challenge, and the transmitter 1230 is further configured to send the LTE AKA authentication challenge to the LTE UE, so that the access network element, the SGSN, and the LTE UE complete security authentication.

In this embodiment of the present invention, an access network element converts information sent by an LTE UE into information that is applicable to a 2G or 3G network system, the access network element identifies a scenario in which the LTE UE accesses a 2G or 3G network, and an HSS generates a special authentication vector, so that the access network element, an SGSN, and the LTE UE can complete security authentication, to enable the LTE UE to use an existing 2G or 3G core network.

Optionally, that the access network element, the SGSN, and the LTE UE complete security authentication includes the following:

The LTE UE verifies the LTE AKA authentication challenge, and then generates a RES and a key K_{ASME}; and
the receiver 1210 is configured to receive an LTE AKA authentication response that includes the RES and is sent by the LTE UE, so that the access network element, the SGSN, and the LTE UE further complete security authentication.

Optionally, the special authentication vector includes an XRES, a CK, and an IK.

Optionally, that the access network element, the SGSN, and the LTE UE further complete security authentication includes the following:

The processor 1220 is further configured to convert the LTE AKA authentication response that includes the RES into a UMTS AKA authentication response that includes the RES, and the transmitter 1230 is further configured to send the UMTS AKA authentication response that includes the RES to the SGSN, so that the SGSN compares the RES with the XRES to determine whether they are the same, and when a result of the comparing is that they are the same, the SGSN sends the CK and/or the IK to the access network element; and
the processor 1220 is further configured to generate the K_{ASME} according to the CK and/or the IK, and the access network element and the LTE UE share the K_{ASME}.

Optionally, that the SGSN compares the RES with the XRES to determine whether they are the same further includes the following: when the result of the comparing is that they are different, security authentication is suspended.

Optionally,
that the proxy server receives the request for an authentication vector, and then sends a request for a special authentication vector to an HSS includes the following:
the proxy server is configured with a list, where the list includes identification information of an LTE UE that accesses a 2G/3G network;
the proxy server learns, according to the identification information in the list, that the identification information of the LTE UE is included in the list, so that the proxy server identifies that it is the LTE UE that accesses the 2G or 3G network; and
the proxy server adds indication information to the request for an authentication vector, to generate the request for a special authentication vector, where the indication information is used to instruct the HSS to generate the special authentication vector.

Optionally, that the HSS generates a special authentication vector according to the request for a special authentication vector includes the following:

The HSS generates an EPS AV for the LTE UE; and
the HSS converts the EPS AV into a UMTS AV format, where the EPS AV that is converted into the UMTS AV format is the special authentication vector.

Optionally, that the HSS converts the EPS AV into a UMTS AV format includes the following:
The HSS uses a RAND of the EPS AV as a RAND of the UMTS AV, uses an AUTN of the EPS AV as an AUTN of the UMTS AV, uses an XRES of the EPS AV as an XRES of the UMTS AV, divides a K_{ASME} (256 bits) of the EPS AV into two parts, and uses the two parts as the CK and the IK of the UMTS AV respectively.

Optionally, the processor 1220 is further configured to generate the K_{ASME} according to a generating rule K_{ASME}= CK∥IK and according to the CK and/or the IK, where "∥" indicates a serial connection, that is, adding the IK to the end of the CK.

In this embodiment of the present invention, an access network element converts a message sent by an LTE UE into a message that is applicable to a 2G or 3G network, and after the access network element identifies a scenario in which the LTE UE accesses the 2G or 3G network through the access network element, an HSS generates a special authentication vector to complete, by using the access network element and an SGSN, security authentication between the LTE UE and a network. The LTE UE does not need to be modified, so that the LTE UE can access a 2G or 3G core network through the access network element in this embodiment, complete security authentication, and use a 2G or 3G core network resource.

FIG. 13 shows a schematic block diagram of a proxy server 1300 of a mobile communications system according to an embodiment of the present invention. FIG. 13 and the method revealed in descriptions of FIG. 13 may be based on FIG. 1 to FIG. 5 in embodiments of the present invention and the methods revealed in FIG. 1 to FIG. 5 in the embodiments of the present invention, or may be based on FIG. 6 to FIG. 12 in the embodiments of the present invention and the apparatuses revealed in FIG. 6 to FIG. 12 in the embodiments of the present invention. As shown in FIG. 12, the proxy server 1300 includes a receiver 1310 and a transmitter 1320.

The receiver 1310 is configured to receive a request for an authentication vector and is sent by an SGSN, where the request for an authentication vector is sent by the SGSN after the SGSN receives a UMTS attach request message sent by an access network element.

The transmitter 1320 is configured to send a request for a special authentication vector to an HSS, so that the HSS generates a special authentication vector according to the request for a special authentication vector.

The receiver 1310 is further configured to receive the special authentication vector sent by the HSS, and then the proxy server sends the special authentication vector to the SGSN, so that the SGSN, the access network element, and an LTE UE complete security authentication.

In this embodiment of the present invention, a proxy server identifies a scenario in which an LTE UE accesses a 2G or 3G network; and an HSS is required to generate a special authentication vector, so that an access network element, an SGSN, and the LTE UE can complete security authentication, to enable the LTE UE to use an existing 2G or 3G core network.

Optionally, the UMTS attach request message is obtained by the access network element by converting an attach request message, and the attach request message is sent by the LTE UE.

Optionally, that the SGSN, the access network element, and an LTE UE complete security authentication includes the following:

The SGSN sends a UMTS AKA authentication challenge to the access network element; the access network element converts the UMTS AKA authentication challenge into an LTE AKA authentication challenge, and then sends the LTE AKA authentication challenge to the LTE UE; and the LTE UE performs verification according to the LTE AKA authentication challenge and generates a RES and a key K_{ASME}, and then sends an LTE AKA authentication response that includes the RES to the access network element, so that the access network element, the SGSN, and the LTE UE further complete security authentication.

Optionally, the special authentication vector includes an XRES, a CK, and an IK.

Optionally, that the access network element, the SGSN, and the LTE UE further complete security authentication includes the following:

The access network element converts the LTE AKA authentication response into a UMTS AKA authentication response, and sends the UMTS AKA authentication response to the SGSN; the SGSN compares the RES with the XRES to determine whether they are the same; when a result of the comparing is that they are the same, the SGSN sends the CK and/or the IK to the access network element; the access network element generates the K_{ASME} according to the CK and/or the IK; and the access network element and the LTE UE share the K_{ASME}.

Optionally, that the SGSN compares the RES with the XRES to determine whether they are the same further includes the following: when the result of the comparing is that they are different, security authentication is suspended.

Optionally, the proxy server may further include a memory 1330 and a processor 1340, and that the transmitter 1320 is configured to send a request for a special authentication vector to an HSS includes the following:

The memory 1330 is configured to store a list, where the list includes identification information of an LTE UE that accesses a 2G/3G network;
the processor 1340 is configured to learn, according to the identification information in the list, that the identification information of the LTE UE is included in the list, so that the processor 1340 identifies that it is the LTE UE that accesses the 2G or 3G network; and
the processor 1340 is further configured to add indication information to the request for an authentication vector, to generate the request for a special authentication vector, where the indication information is used to instruct the HSS to generate the special authentication vector.

Optionally, that the HSS generates a special authentication vector includes the following:

The HSS generates an EPS AV for the LTE UE; and
the HSS converts the EPS AV into a UMTS AV format, where the EPS AV that is converted into the UMTS AV format is the special authentication vector.

Optionally, that the HSS converts the EPS AV into a UMTS AV format includes the following:

The HSS uses a RAND of the EPS AV as a RAND of the UMTS AV, uses an AUTN of the EPS AV as an AUTN of the UMTS AV, uses an XRES of the EPS AV as an XRES of the UMTS AV, divides a K_{ASME} of the EPS AV into two parts, and uses the two parts as the CK and the IK of the UMTS AV respectively.

Optionally, that the access network element generates the K_{ASME} according to the CK and/or the IK includes the following:

The access network element generates the K_{ASME} according to a generating rule K_{ASME} = CK∥IK and according to the CK and/or the IK.

In this embodiment of the present invention, an access network element converts a message sent by an LTE UE into a message that is applicable to a 2G or 3G network, and after a proxy server identifies a scenario in which the LTE UE accesses a 2G or 3G core network through the access network element, an HSS generates a special authentication vector to complete, by using the access network element and an SGSN, security authentication between the LTE UE and a network. The LTE UE does not need to be modified, so that the LTE UE can access the 2G or 3G core network through the access network element in this embodiment, complete security authentication, and use a 2G or 3G core network resource.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or a disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely exemplary embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A method for security authentication of a mobile communications system, comprising:
receiving, by an HSS, a request for a special authentication vector and is sent by a proxy server, wherein the request for a special authentication vector is sent by the proxy server after the proxy server receives a request for an authentication vector and is sent by an SGSN;
generating, by the HSS, a special authentication vector according to the request for a special authentication vector; and
sending, by the HSS, the special authentication vector to the proxy server, so that the proxy server, an access network element, the SGSN, and an LTE UE complete security authentication.

2. The method according to claim 1, wherein the request for an authentication vector is sent by the SGSN to the proxy server after the SGSN receives a UMTS attach request message sent by the access network element, the UMTS attach request message is obtained by the access network element by converting an attach request message, and the attach request message is sent by the LTE UE.

3. The method according to claim 1 or 2, wherein that the proxy server, an access network element, the SGSN, and an LTE UE complete security authentication comprises:
sending, by the proxy server, the special authentication vector to the SGSN; sending, by the SGSN, a UMTS AKA authentication challenge to the access network element; converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that comprises the RES to the access network element, so that the access network element, the SGSN, and the LTE UE further complete security authentication.

4. The method according to any one of claims 1 to 3, wherein:
the special authentication vector comprises an XRES, a CK, and an IK; and
that the access network element, the SGSN, and the LTE UE further complete security authentication comprises:
converting, by the access network element, the LTE AKA authentication response into a UMTS AKA authentication response, and sending the UMTS AKA authentication response to the SGSN; comparing, by the SGSN, the RES with the XRES to determine whether they are the same; when a result of the comparing is that they are the same, sending, by the SGSN, the CK and/or the IK to the access network element; generating, by the access network element, the K_{ASME} according to the CK and/or the IK; and sharing, by the access network element and the LTE UE, the K_{ASME}.

5. The method according to claim 4, wherein the comparing, by the SGSN, the RES with the XRES to determine whether they are the same further comprises: when the result of the comparing is that they are different, suspending security authentication.

6. The method according to any one of claims 1 to 5, wherein that the request for a special authentication vector is sent by the proxy server after the proxy server receives a request for an authentication vector and is sent by an SGSN comprises:
receiving, by the proxy server, the request for an authentication vector and is sent by the SGSN;
the proxy server is configured with a list, wherein the list comprises identification information of an LTE UE that accesses a 2G/3G network;
learning, by the proxy server according to the identification information in the list, that the identification information of the LTE UE is comprised in the list, so that the proxy server identifies that it is the LTE UE that accesses the 2G or 3G network; and
adding, by the proxy server, indication information to the request for an authentication vector, to generate the request for a special authentication vector, wherein the indication information is used to instruct the HSS to generate the special authentication vector.

7. The method according to any one of claims 1 to 6, wherein the generating, by the HSS, a special authentication vector according to the request for a special authentication vector comprises:
generating, by the HSS, an EPS AV for the LTE UE; and
converting, by the HSS, the EPS AV into a UMTS AV format, wherein the EPS AV that is converted into the UMTS AV format is the special authentication vector.

8. The method according to claim 7, wherein the converting, by the HSS, the EPS AV into a UMTS AV format comprises:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

9. The method according to any one of claims 4 to 8, wherein the generating, by the access network element, the K_{ASME} according to the CK and/or the IK comprises:
generating, by the access network element, the K_{ASME} according to a generating rule K_{ASME} = CK∥IK and according to the CK and/or the IK.

10. A method for security authentication of a mobile communications system, comprising:
receiving, by an SGSN, a UMTS attach request message sent by an access network element, wherein the UMTS attach request message is obtained by the access network element by converting an attach request message sent by an LTE UE;
sending, by the SGSN, a request for an authentication vector to a proxy server, so that the proxy server receives the request for an authentication vector, and then sends a request for a special authentication vector to an HSS; and the HSS generates a special authentication vector according to the request for a special authentication vector, and then sends the special authentication vector to the proxy server; and
after receiving the special authentication vector from the proxy server, sending, by the SGSN, a UMTS AKA authentication challenge to the access network element, so that the SGSN, the access network element, and the LTE UE complete security authentication.

11. The method according to claim 10, wherein that the SGSN, the access network element, and the LTE UE complete security authentication comprises:
converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that comprises the RES to the access network element, so that the access network element, the SGSN, and the LTE UE further complete security authentication.

12. The method according to claim 10 or 11, wherein:
the special authentication vector comprises an XRES, a CK, and an IK; and
that the access network element, the SGSN, and the LTE UE further complete security authentication comprises:
converting, by the access network element, the LTE AKA authentication response into a UMTS AKA authentication response, and sending the UMTS AKA authentication response to the SGSN; comparing, by the SGSN, the RES with the XRES to determine whether they are the same; when a result of the comparing is that they are the same, sending, by the SGSN, the CK and/or the IK to the access network element; generating, by the access network element, the K_{ASME} according to the CK and/or the IK; and sharing, by the access network element and the LTE UE, the K_{ASME}.

13. The method according to claim 12, wherein the comparing, by the SGSN, the RES with the XRES to determine whether they are the same further comprises: when the result of the comparing is that they are different, suspending security authentication.

14. The method according to any one of claims 10 to 13, wherein that the proxy server receives the request for an authentication vector, and then sends a request for a special authentication vector to an HSS comprises:
the proxy server is configured with a list, wherein the list comprises identification information of an LTE UE that accesses a 2G/3G network;
learning, by the proxy server according to the identification information in the list, that the identification information of the LTE UE is comprised in the list, so that the proxy server identifies that it is the LTE UE that accesses the 2G or 3G network; and
adding, by the proxy server, indication information to the request for an authentication vector, to generate the request for a special authentication vector, wherein the indication information is used to instruct the HSS to generate the special authentication vector.

15. The method according to any one of claims 10 to 14, wherein that the HSS generates a special authentication vector according to the request for a special authentication vector comprises:
generating, by the HSS, an EPS AV for the LTE UE; and
converting, by the HSS, the EPS AV into a UMTS AV format, wherein the EPS AV that is converted into the UMTS AV format is the special authentication vector.

16. The method according to claim 15, wherein the converting, by the HSS, the EPS AV into a UMTS AV format comprises:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

17. The method according to any one of claims 12 to 16, wherein the generating, by the access network element, the K_{ASME} according to the CK and/or the IK comprises:
generating, by the access network element, the K_{ASME} according to a generating rule K_{ASME} = CK∥IK and according to the CK and/or the IK.

18. A method for security authentication of a mobile communications system, comprising:
converting, by an access network element, an attach request message from an LTE UE into a UMTS attach request message;
sending, by the access network element, the UMTS attach request message to an SGSN, so that the SGSN receives the UMTS attach request message, and then sends a request for an authentication vector to a proxy server; the proxy server receives the request for an authentication vector, and then sends a request for a special authentication vector to an HSS; and the HSS generates a special authentication vector according to the request for a special authentication vector, and then sends the special authentication vector to the proxy server;
receiving, by the access network element, a UMTS AKA authentication challenge, wherein the UMTS AKA authentication challenge is sent by the SGSN after the SGSN sends, to the SGSN, the special authentication vector that is sent by the proxy server; and
converting, by the access network element, the UMTS AKA authentication challenge into an LTE AKA authentication challenge, and then sending the LTE AKA authentication challenge to the LTE UE, so that the access network element, the SGSN, and the LTE UE complete security authentication.

19. The method according to claim 18, wherein that the access network element, the SGSN, and the LTE UE complete security authentication comprises:
verifying, by the LTE UE, the LTE AKA authentication challenge, and then generating a RES and a key K_{ASME}; and
receiving, by the access network element, an LTE AKA authentication response that comprises the RES and is sent by the LTE UE, so that the access network element, the SGSN, and the LTE UE further complete security authentication.

20. The method according to claim 18 or 19, wherein:
the special authentication vector comprises an XRES, a CK, and an IK; and
that the access network element, the SGSN, and the LTE UE further complete security authentication comprises:
converting, by the access network element, the LTE AKA authentication response that comprises the RES into a UMTS AKA authentication response that comprises the RES, and sending the UMTS AKA authentication response that comprises the RES to the SGSN, so that the SGSN compares the RES with the XRES to determine whether they are the same, and when a result of the comparing is that they are the same, sending, by the SGSN, the CK and/or the IK to the access network element; and
generating, by the access network element, the K_{ASME} according to the CK and/or the IK, and sharing, by the access network element and the LTE UE, the K_{ASME}.

21. The method according to claim 20, wherein that the SGSN compares the RES with the XRES to determine whether they are the same further comprises: when the result of the comparing is that they are different, suspending security authentication.

22. The method according to any one of claims 18 to 21, wherein that the proxy server receives the request for an authentication vector, and then sends a request for a special authentication vector to an HSS comprises:
the proxy server is configured with a list, wherein the list comprises identification information of an LTE UE that accesses a 2G/3G network;
learning, by the proxy server according to the identification information in the list, that the identification information of the LTE UE is comprised in the list, so that the proxy server identifies that it is the LTE UE that accesses the 2G or 3G network; and
adding, by the proxy server, indication information to the request for an authentication vector, to generate the request for a special authentication vector, wherein the indication information is used to instruct the HSS to generate the special authentication vector.

23. The method according to any one of claims 18 to 22, wherein that the HSS generates a special authentication vector according to the request for a special authentication vector comprises:
generating, by the HSS, an EPS AV for the LTE UE; and
converting, by the HSS, the EPS AV into a UMTS AV format, wherein the EPS AV that is converted into the UMTS AV format is the special authentication vector.

24. The method according to claim 23, wherein the converting, by the HSS, the EPS AV into a UMTS AV format comprises:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

25. The method according to any one of claims 20 to 24, wherein the generating, by the access network element, the K_{ASME} according to the CK and/or the IK comprises:
generating, by the access network element, the K_{ASME} according to a generating rule K_{ASME} = CK∥IK and according to the CK and/or the IK.

26. A method for security authentication of a mobile communications system, comprising:
receiving, by a proxy server, a request for an authentication vector and is sent by an SGSN, wherein the request for an authentication vector is sent by the SGSN after the SGSN receives a UMTS attach request message sent by an access network element;
sending, by the proxy server, a request for a special authentication vector to an HSS, so that the HSS generates a special authentication vector according to the request for a special authentication vector; and
after receiving the special authentication vector sent by the HSS, sending, by the proxy server, the special authentication vector to the SGSN, so that the SGSN, the access network element, and an LTE UE complete security authentication.

27. The method according to claim 26, wherein the UMTS attach request message is obtained by the access network element by converting an attach request message, and the attach request message is sent by the LTE UE.

28. The method according to claim 26 or 27, wherein that the SGSN, the access network element, and an LTE UE complete security authentication comprises:
sending, by the SGSN, a UMTS AKA authentication challenge to the access network element; converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that comprises the RES to the access network element, so that the access network element, the SGSN, and the LTE UE further complete security authentication.

29. The method according to any one of claims 26 to 28, wherein:
the special authentication vector comprises an XRES, a CK, and an IK; and
that the access network element, the SGSN, and the LTE UE further complete security authentication comprises:
converting, by the access network element, the LTE AKA authentication response into a UMTS AKA authentication response, and sending the UMTS AKA authentication response to the SGSN; comparing, by the SGSN, the RES with the XRES to determine whether they are the same; when a result of the comparing is that they are the same, sending, by the SGSN, the CK and/or the IK to the access network element; generating, by the access network element, the K_{ASME} according to the CK and/or the IK; and sharing, by the access network element and the LTE UE, the K_{ASME}.

30. The method according to claim 29, wherein the comparing, by the SGSN, the RES with the XRES to determine whether they are the same further comprises: when the result of the comparing is that they are different, suspending security authentication.

31. The method according to any one of claims 26 to 30, wherein the sending, by the proxy server, a request for a special authentication vector to an HSS comprises:
the proxy server is configured with a list, wherein the list comprises identification information of an LTE UE that accesses a 2G/3G network;
learning, by the proxy server according to the identification information in the list, that the identification information of the LTE UE is comprised in the list, so that the proxy server identifies that it is the LTE UE that accesses the 2G or 3G network; and
adding, by the proxy server, indication information to the request for an authentication vector, to generate the request for a special authentication vector, wherein the indication information is used to instruct the HSS to generate the special authentication vector.

32. The method according to any one of claims 26 to 31, wherein the generating, by the HSS, a special authentication vector comprises:
generating, by the HSS, an EPS AV for the LTE UE; and
converting, by the HSS, the EPS AV into a UMTS AV format, wherein the EPS AV that is converted into the UMTS AV format is the special authentication vector.

33. The method according to claim 32, wherein the converting, by the HSS, the EPS AV into a UMTS AV format comprises:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

34. The method according to any one of claims 29 to 33, wherein the generating, by the access network element, the K_{ASME} according to the CK and/or the IK comprises:
generating, by the access network element, the K_{ASME} according to a generating rule K_{ASME} = CK∥IK and according to the CK and/or the IK.

35. An HSS, comprising a receiving module, a processing module, and a sending module, wherein:
the receiving module is configured to receive a request for a special authentication vector and is sent by a proxy server, wherein the request for a special authentication vector is sent by the proxy server after the proxy server receives a request for an authentication vector and is sent by an SGSN;
the processing module is configured to generate a special authentication vector according to the request for a special authentication vector; and
the sending module is configured to send the special authentication vector to the proxy server, so that the proxy server, an access network element, the SGSN, and an LTE UE complete security authentication.

36. The HSS according to claim 35, wherein the request for an authentication vector is sent by the SGSN to the proxy server after the SGSN receives a UMTS attach request message sent by the access network element, the UMTS attach request message is obtained by the access network element by converting an attach request message, and the attach request message is sent by the LTE UE.

37. The HSS according to claim 35 or 36, wherein that the proxy server, an access network element, the SGSN, and an LTE UE complete security authentication comprises:
sending, by the proxy server, the special authentication vector to the SGSN; sending, by the SGSN, a UMTS AKA authentication challenge to the access network element; converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that comprises the RES to the access network element, so that the access network element, the SGSN, and the LTE UE further complete security authentication.

38. The HSS according to any one of claims 35 to 38, wherein:
the special authentication vector comprises an XRES, a CK, and an IK; and
that the access network element, the SGSN, and the LTE UE further complete security authentication comprises:
converting, by the access network element, the LTE AKA authentication response into a UMTS AKA authentication response, and sending the UMTS AKA authentication response to the SGSN; comparing, by the SGSN, the RES with the XRES to determine whether they are the same; when a result of the comparing is that they are the same, sending, by the SGSN, the CK and/or the IK to the access network element; generating, by the access network element, the K_{ASME} according to the CK and/or the IK; and sharing, by the access network element and the LTE UE, the K_{ASME}.

39. The HSS according to claim 38, wherein the comparing, by the SGSN, the RES with the XRES to determine whether they are the same further comprises: when the result of the comparing is that they are different, suspending security authentication.

40. The HSS according to any one of claims 35 to 39, wherein that the request for a special authentication vector is sent by the proxy server after the proxy server receives a request for an authentication vector and is sent by an SGSN comprises:
receiving, by the proxy server, the request for an authentication vector and is sent by the SGSN;
identifying, by the proxy server, that it is the LTE UE that accesses a 2G or 3G network; and
adding, by the proxy server, indication information to the authentication vector, to generate the request for a special authentication vector, wherein the indication information is used to instruct the HSS to generate the special authentication vector.

41. The HSS according to any one of claims 35 to 40, wherein that the processing module is configured to generate a special authentication vector according to the request for a special authentication vector comprises:
the processing module is configured to generate an EPS AV for the LTE UE; and
the processing module is configured to convert the EPS AV into a UMTS AV format, wherein the EPS AV that is converted into the UMTS AV format is the special authentication vector.

42. The HSS according to claim 41, wherein that the processing module is configured to convert the EPS AV into a UMTS AV format comprises:
the processing module is configured to: use a RAND of the EPS AV as a RAND of the UMTS AV, use an AUTN of the EPS AV as an AUTN of the UMTS AV, use an XRES of the EPS AV as an XRES of the UMTS AV, divide a K_{ASME} of the EPS AV into two parts, and use the two parts as the CK and the IK of the UMTS AV respectively.

43. The HSS according to any one of claims 38 to 42, wherein the generating, by the access network element, the K_{ASME} according to the CK and/or the IK comprises:
generating, by the access network element, the K_{ASME} according to a generating rule K_{ASME} = CK∥IK and according to the CK and/or the IK.

44. An SGSN, comprising a receiving module and a sending module, wherein:
the receiving module is configured to receive a UMTS attach request message sent by an access network element, wherein the UMTS attach request message is obtained by the access network element by converting an attach request message sent by an LTE UE;
the sending module is configured to send a request for an authentication vector to a proxy server, so that the proxy server receives the request for an authentication vector, and then sends a request for a special authentication vector to an HSS; and the HSS generates a special authentication vector according to the request for a special authentication vector, and then sends the special authentication vector to the proxy server; and
the receiving module is further configured to receive the special authentication vector from the proxy server, and the sending module is further configured to: after the receiving module receives the special authentication vector, send a UMTS AKA authentication challenge to the access network element, so that the SGSN, the access network element, and the LTE UE complete security authentication.

45. The SGSN according to claim 44, wherein that the SGSN, the access network element, and the LTE UE complete security authentication comprises:
converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that comprises the RES to the access network element, so that the access network element, the SGSN, and the LTE UE further complete security authentication.

46. The SGSN according to claim 44 or 45, wherein the SGSN further comprises a processing module;
the special authentication vector comprises an XRES, a CK, and an IK; and
that the access network element, the SGSN, and the LTE UE further complete security authentication comprises:
the access network element converts the LTE AKA authentication response into a UMTS AKA authentication response, and sends the UMTS AKA authentication response to the receiving module; the processing module is configured to compare the RES with the XRES to determine whether they are the same; when a result of the comparing is that they are the same, the sending module sends the CK and/or the IK to the access network element; the access network element generates the K_{ASME} according to the CK and/or the IK, wherein the CK and/or the IK is sent by the sending module; and the access network element and the LTE UE share the K_{ASME}.

47. The SGSN according to claim 46, wherein that the processing module is configured to compare the RES with the XRES to determine whether they are the same further comprises: when the result of the comparing is that they are different, suspending security authentication.

48. The SGSN according to any one of claims 44 to 47, wherein that the proxy server receives the request for an authentication vector, and then sends a request for a special authentication vector to an HSS comprises:
the proxy server is configured with a list, wherein the list comprises identification information of an LTE UE that accesses a 2G/3G network;
learning, by the proxy server according to the identification information in the list, that the identification information of the LTE UE is comprised in the list, so that the proxy server identifies that it is the LTE UE that accesses the 2G or 3G network; and
adding, by the proxy server, indication information to the request for an authentication vector, to generate the request for a special authentication vector, wherein the indication information is used to instruct the HSS to generate the special authentication vector.

49. The SGSN according to any one of claims 44 to 48, wherein that the HSS generates a special authentication vector according to the request for a special authentication vector comprises:
generating, by the HSS, an EPS AV for the LTE UE; and
converting, by the HSS, the EPS AV into a UMTS AV format, wherein the EPS AV that is converted into the UMTS AV format is the special authentication vector.

50. The SGSN according to claim 49, wherein the converting, by the HSS, the EPS AV into a UMTS AV format comprises:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

51. The SGSN according to any one of claims 46 to 50, wherein that the access network element generates the K_{ASME} according to the CK and/or the IK comprises:
generating, by the access network element, the K_{ASME} according to a generating rule K_{ASME} = CK∥IK and according to the CK and/or the IK.

52. An access network element, comprising a receiving module, a processing module, and a sending module, wherein:
the receiving module is configured to receive an attach request message from an LTE UE, and the processing module is configured to convert the attach request message into a UMTS attach request message;
the sending module is configured to send the UMTS attach request message to an SGSN, so that the SGSN receives the UMTS attach request message, and then sends a request for an authentication vector to a proxy server; the proxy server receives the request for an authentication vector, and then sends a request for a special authentication vector to an HSS; and the HSS generates a special authentication vector according to the request for a special authentication vector, and then sends the special authentication vector to the proxy server;
the receiving module is further configured to receive a UMTS AKA authentication challenge, wherein the UMTS AKA authentication challenge is sent by the SGSN after the SGSN sends, to the SGSN, the special authentication vector that is sent by the proxy server; and
the processing module is further configured to convert the UMTS AKA authentication challenge into an LTE AKA authentication challenge, and the sending module is further configured to send the LTE AKA authentication challenge to the LTE UE, so that the access network element, the SGSN, and the LTE UE complete security authentication.

53. The access network element according to claim 52, wherein that the access network element, the SGSN, and the LTE UE complete security authentication comprises:
the LTE UE verifies the LTE AKA authentication challenge, and then generates a RES and a key K_{ASME}; and
the receiving module is configured to receive an LTE AKA authentication response that comprises the RES and is sent by the LTE UE, so that the access network element, the SGSN, and the LTE UE further complete security authentication.

54. The access network element according to claim 52 or 53, wherein:
the special authentication vector comprises an XRES, a CK, and an IK; and
that the access network element, the SGSN, and the LTE UE further complete security authentication comprises:
the processing module is further configured to convert the LTE AKA authentication response that comprises the RES into a UMTS AKA authentication response that comprises the RES, and the sending module is further configured to send the UMTS AKA authentication response that comprises the RES to the SGSN, so that the SGSN compares the RES with the XRES to determine whether they are the same, and when a result of the comparing is that they are the same, the SGSN sends the CK and/or the IK to the access network element; and
the processing module is further configured to generate the K_{ASME} according to the CK and/or the IK, and the access network element and the LTE UE share the K_{ASME}.

55. The access network element according to claim 54, wherein that the SGSN compares the RES with the XRES to determine whether they are the same further comprises: when the result of the comparing is that they are different, suspending security authentication.

56. The access network element according to any one of claims 52 to 55, wherein that the proxy server receives the request for an authentication vector, and then sends a request for a special authentication vector to an HSS comprises:
the proxy server is configured with a list, wherein the list comprises identification information of an LTE UE that accesses a 2G/3G network;
learning, by the proxy server according to the identification information in the list, that the identification information of the LTE UE is comprised in the list, so that the proxy server identifies that it is the LTE UE that accesses the 2G or 3G network; and
adding, by the proxy server, indication information to the request for an authentication vector, to generate the request for a special authentication vector, wherein the indication information is used to instruct the HSS to generate the special authentication vector.

57. The access network element according to any one of claims 52 to 56, wherein that the HSS generates a special authentication vector according to the request for a special authentication vector comprises:
generating, by the HSS, an EPS AV for the LTE UE; and
converting, by the HSS, the EPS AV into a UMTS AV format, wherein the EPS AV that is converted into the UMTS AV format is the special authentication vector.

58. The access network element according to claim 57, wherein the converting, by the HSS, the EPS AV into a UMTS AV format comprises:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} (256 bits) of the EPS AV into two parts, and using the two parts as the CK and the IK of the UMTS AV respectively.

59. The access network element according to any one of claims 54 to 58, wherein
the processing module is further configured to generate the K_{ASME} according to a generating rule K_{ASME} = CK∥IK and according to the CK and/or the IK.

60. A proxy server of a mobile communications system, comprising a receiving module and a sending module, wherein:
the receiving module is configured to receive a request for an authentication vector and is sent by an SGSN, wherein the request for an authentication vector is sent by the SGSN after the SGSN receives a UMTS attach request message sent by an access network element;
the sending module is configured to send a request for a special authentication vector to an HSS, so that the HSS generates a special authentication vector according to the request for a special authentication vector; and
the receiving module is configured to receive the special authentication vector sent by the HSS, and then the proxy server sends the special authentication vector to the SGSN, so that the SGSN, the access network element, and an LTE UE complete security authentication.

61. The method according to claim 60, wherein the UMTS attach request message is obtained by the access network element by converting an attach request message, and the attach request message is sent by the LTE UE.

62. The method according to claim 60 or 61, wherein that the SGSN, the access network element, and an LTE UE complete security authentication comprises:
sending, by the SGSN, a UMTS AKA authentication challenge to the access network element; converting, by the access network element, the UMTS AKA authentication challenge into an LTE AKA authentication challenge, and then sending the LTE AKA authentication challenge to the LTE UE; and performing, by the LTE UE, verification according to the LTE AKA authentication challenge and generating a RES and a key K_{ASME}, and then sending an LTE AKA authentication response that comprises the RES to the access network element, so that the access network element, the SGSN, and the LTE UE further complete security authentication.

63. The method according to any one of claims 60 to 62, wherein:
the special authentication vector comprises an XRES, a CK, and an IK; and
that the access network element, the SGSN, and the LTE UE further complete security authentication comprises:
converting, by the access network element, the LTE AKA authentication response into a UMTS AKA authentication response, and sending the UMTS AKA authentication response to the SGSN; comparing, by the SGSN, the RES with the XRES to determine whether they are the same; when a result of the comparing is that they are the same, sending, by the SGSN, the CK and/or the IK to the access network element; generating, by the access network element, the K_{ASME} according to the CK and/or the IK; and sharing, by the access network element and the LTE UE, the K_{ASME}.

64. The method according to claim 63, wherein the comparing, by the SGSN, the RES with the XRES to determine whether they are the same further comprises: when the result of the comparing is that they are different, suspending security authentication.

65. The method according to any one of claims 60 to 64, further comprising a storage module and a processing module, wherein:
that the sending module is configured to send a request for a special authentication vector to an HSS comprises:
the storage module is configured to store a list, wherein the list comprises identification information of an LTE UE that accesses a 2G/3G network;
the processing module is configured to learn, according to the identification information in the list, that the identification information of the LTE UE is comprised in the list, so that the processing module is configured to identify that it is the LTE UE that accesses the 2G or 3G network; and
the processing module is further configured to add indication information to the request for an authentication vector, to generate the request for a special authentication vector, wherein the indication information is used to instruct the HSS to generate the special authentication vector.

66. The method according to any one of claims 60 to 65, wherein the generating, by the HSS, a special authentication vector comprises:
generating, by the HSS, an EPS AV for the LTE UE; and
converting, by the HSS, the EPS AV into a UMTS AV format, wherein the EPS AV that is converted into the UMTS AV format is the special authentication vector.

67. The method according to claim 66, wherein the converting, by the HSS, the EPS AV into a UMTS AV format comprises:
using, by the HSS, a RAND of the EPS AV as a RAND of the UMTS AV, using an AUTN of the EPS AV as an AUTN of the UMTS AV, using an XRES of the EPS AV as an XRES of the UMTS AV, dividing a K_{ASME} of the EPS AV into two parts, and using the two parts as the CK and the IK of the UMTS AV respectively.

68. The method according to any one of claims 63 to 67, wherein the generating, by the access network element, the K_{ASME} according to the CK and/or the IK comprises:
generating, by the access network element, the K_{ASME} according to a generating rule K_{ASME} = CK∥IK and according to the CK and/or the IK.
